(19) Europäisches Patentamt
European Patent Office
Office européen des brevets

(11) **EP 1 444 651 B1**

(12) **FASCICULE DE BREVET EUROPEEN**

(45) Date de publication et mention
de la délivrance du brevet:
**28.10.2009 Bulletin 2009/44**

(51) Int Cl.:
***G06T 1/00*** *(2006.01)*

(21) Numéro de dépôt: **02747504.5**

(86) Numéro de dépôt international:
**PCT/FR2002/001910**

(22) Date de dépôt: **05.06.2002**

(87) Numéro de publication internationale:
**WO 2003/007236 (23.01.2003 Gazette 2003/04)**

(54) **PROCEDE ET SYSTEME POUR REDUIRE LA FREQUENCE DES MISES A JOUR DE MOYENS**

VERFAHREN UND SYSTEM ZUR VERRINGERUNG DER AKTUALISIERUNGS-HÄUFIGKEIT

METHOD AND SYSTEM FOR REDUCING UPDATE FREQUENCY OF MEANS

(84) Etats contractants désignés:
**AT BE CH CY DE DK ES FI FR GB GR IE IT LI LU MC NL PT SE TR**

(30) Priorité: **12.07.2001 FR 0109291**
**12.07.2001 FR 0109292**

(43) Date de publication de la demande:
**11.08.2004 Bulletin 2004/33**

(73) Titulaire: **DO LABS**
**92100 Boulogne Billancourt (FR)**

(72) Inventeurs:
• **LIEGE, Bruno**
**F-75015 Paris (FR)**
• **GUICHARD, Frédéric**
**F-75012 Paris (FR)**

(74) Mandataire: **Grynwald, Albert et al**
**SCHMIT CHRETIEN**
**16, rue de la Paix**
**75002 Paris (FR)**

(56) Documents cités:
**EP-A- 1 045 317      WO-A- 01/35052**
**US-A- 5 353 392**

• **NISO: "NISO draft standard. Data dictionary -Technical Metadata for Digital Still Images- working draft, 1.0" NO NAME, [en ligne] 5 juillet 2000 (2000-07-05), XP002224028 Extrait de l'Internet: <URL:www.niso.org/pdfs/ DataDict.pdf> [extrait le 2002-12-06]**
• **JAPAN ELECTRONIC INDUSTRY DEVELOPMENT ASSOCIATION: "digital still camera image file format standard(exchangeable image file format for digital still cameras: exif) version 2.1" NO NAME, [en ligne] 12 juin 1998 (1998-06-12), pages 1-166, XP002224029 Extrait de l'Internet: <URL:www.pima.net/ standards/it10/PIMA15740 /Exif_2-1.PDF> [extrait le 2002-12-06]**
• **WATANABE M. ET AL: 'AN IMAGE DATA FILE FORMAT FOR DIGITAL STILL CAMERA' 1995, pages 421 - 424, XP000618775**

**Description**

La présente invention concerne un procédé et un système pour réduire la fréquence des mises à jour de moyens de traitement d'images.

*Solution*

Procédé

L'invention concerne un procédé pour réduire la fréquence des mises à jour de moyens de traitement d'images, notamment un logiciel et/ou un composant. Les moyens de traitement d'images permettant de modifier la qualité des images numériques provenant ou destinées à une chaîne d'appareils. La chaîne d'appareil comporte au moins un appareil de capture d'image et/ou au moins un appareil de restitution d'image. Les moyens de traitement d'image mettent en oeuvre des informations formatées liées aux défauts d'au moins un appareil de la chaîne d'appareils. Les informations formatées dépendent d'au moins une variable. Les informations formatées permettant d'établir une correspondance entre une partie des variables et des identifiants. Les identifiants permettent de déterminer la valeur de la variable correspondante à l'identifiant en tenant compte de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Le document NISO: "NISO draft standard. Data dictionary -Technical Metadata for Digital Still images- working draft, 1.0" 5 juillet 2000, XP002224028 Extrait de l'Internet le 2002-12-0: www.niso.org/pdfs/DataDict.pdf divulgue des informations formatées servant à estimer l'exactitude de la sortie d'un système de traitement d'images, et les exactitudes des techniques de préservation de l'image, particulièrement en cas de migration.

De préférence, le procédé selon l'invention est tel que les informations formatées comprennent des paramètres d'au moins un modèle paramétrable dépendant des variables.

De préférence, le procédé selon l'invention est tel que la correspondance entre la partie concernée des variables et les identifiants est établie par une table de correspondance.

**Compatibilité des modèles paramétrables**

Les modèles paramétrables peuvent varier au fur et à mesure de la mise à jour successive des moyens de traitement d'image. De préférence dans le cas de cette variante de réalisation du procédé selon l'invention, les informations formatées comprennent en outre des éléments d'identification des modèles paramétrables successivement mis en oeuvre. Il résulte de la combinaison des traits techniques qu'il est possible d'identifier la fraction des informations formatées relative à des modèles paramétrables antérieurs à la diffusion d'une version des moyens de traitement d'image.

**Compatibilité descendante des variables**

L'identifiant peut désigner un champ dont la signification physique et le contenu ont été définis, notamment dans un format du type Exif, postérieurement à la diffusion des moyens de traitement d'image. De préférence dans le cas de cette variante de réalisation du procédé selon l'invention, les moyens de traitement d'image permettent d'obtenir la valeur de champs dont la signification physique et/ou la valeur ont été définis postérieurement à la diffusion des moyens de traitement d'image. Les moyens de traitement d'image permettent de déterminer la valeur de la variable correspondant à l'identifiant concerné en utilisant la correspondance.

**Compatibilité ascendante des variables**

Les identifiants peuvent désigner des champs dont la signification physique et le contenu ont été définis, notamment dans un format du type Exif, antérieurement à la diffusion des moyens de traitement d'image. Les images peuvent avoir une existence antérieure à la diffusion des moyens de traitement d'image. De préférence dans le cas de cette variante de réalisation du procédé selon l'invention, les moyens de traitement d'image permettent d'obtenir la valeur des champs désignés par les identifiants à partir de données relative à l'image. Les moyens de traitement d'image permettent de déterminer la valeur de la variable correspondant à l'identifiant concerné en utilisant la correspondance. Il résulte de la combinaison des traits techniques que les moyens de traitement d'image peuvent modifier la qualité des images produites avant la diffusion des moyens de traitement.

De préférence, le procédé selon l'invention est tel que les informations formatées comprennent en outre le nombre des variables.

Les informations formatées peuvent comprendre des paramètres de plusieurs types de modèles paramétrables. De préférence dans le cas de cette variante de réalisation du procédé selon l'invention, les paramètres d'un type donné de modèle paramétrable sont identifiés par un élément d'identification de type de modèle paramétrable. Les informations formatées comprennent en outre l'élément d'identification de type de modèle paramétrable. Il résulte de la combinaison des traits techniques qu'il est possible de choisir le type de modèle paramétrable au moment de produire les informations formatées.

De préférence, selon l'invention le procédé est tel que les valeurs des paramètres du modèle paramétrable permettent d'identifier une fonction mathématique des variables. La fonction mathématique ainsi identifiée permet de modifier la qualité de l'image, en fonction de valeurs déterminées des variables. Il résulte également de la combinaison des traits techniques qu'il est possible de calculer la fonction mathématique, au moment de modifier la qualité des images, pour le type de modèle paramétrable utilisé lors de la production des informations formatées.

De préférence, le procédé selon l'invention est tel qu'au moins un des types de modèle paramétrable, ci-après dénommé modèle paramétrable générique, est tel les valeurs des paramètres du modèle paramétrable générique permettent d'identifier n'importe quelle fonction mathématique des variables. La fonction mathématique ainsi identifiée permet de modifier la qualité de l'image, en fonction de valeurs déterminées des variables. Il résulte de la combinaison des traits techniques qu'il est possible de produire des informations formatées relatives aux défauts d'un appareil de complexité arbitraire.

De préférence, le procédé selon l'invention est tel que les informations formatées comprennent en outre des programmes informatiques et/ou des liens vers des programmes informatiques. Il résulte de la combinaison des traits techniques qu'il est possible de diffuser des moyens de traitement d'image appelant des sous-programmes informatiques contenus dans les informations formatées, permettant de modifier la qualité de l'image, notamment en traitant des défauts définis après la diffusion des moyens de traitement.

L'invention concerne également un procédé destiné à réduire la fréquence de mise à jour de moyens de traitement permettant de modifier la qualité d'au moins un plan couleur d'une image couleur. Le plan couleur est caractérisé par une couleur déterminée. De préférence dans le cas de ce procédé selon l'invention, les informations formatées comprennent en outre des données relatives à la couleur déterminée. Il résulte de la combinaison des traits techniques que les moyens de traitement d'image peuvent calculer le plan couleur pour une couleur déterminée définie postérieurement à la diffusion des moyens de traitement d'image.

De préférence, le procédé selon l'invention est tel que les données relatives à la couleur déterminée permettent en outre de déterminer la fraction des informations formatées qu'il convient de mettre en oeuvre pour modifier la qualité du plan couleur. Il résulte de la combinaison des traits techniques que les moyens de traitement peuvent appliquer un traitement particulier, notamment un traitement d'un niveau de flou, pour une couleur déterminée définie postérieurement à la diffusion des moyens de traitement d'image.

L'invention concerne également un procédé destiné à réduire la fréquence de mise à jour de moyens de traitement permettant de modifier la qualité d'images selon plusieurs défauts. De préférence dans le cas de ce procédé, selon l'invention, les informations formatées comprennent en outre des données relatives à au moins un défaut déterminé.

De préférence, selon l'invention, les données relatives au défaut déterminé permettent en outre de déterminer la fraction des informations formatées qu'il convient de mettre en oeuvre pour modifier la qualité d'images selon le défaut déterminé. Il résulte de la combinaison des traits techniques que les moyens de traitement peuvent modifier la qualité d'images en utilisant des informations formatées relatives à des défauts dont au moins un des défauts est défini postérieurement à la diffusion des moyens de traitement.

**Système**

L'invention concerne un système pour réduire la fréquence des mises à jour de moyens de traitement d'images, notamment un logiciel et/ou un composant. Les moyens de traitement d'images permettent de modifier la qualité des images numériques provenant ou destinées à une chaîne d'appareils. La chaîne d'appareil comporte au moins un appareil de capture d'image et/ou au moins un appareil de restitution d'image. Les moyens de traitement d'image mettent en oeuvre des informations formatées liées aux défauts d'au moins un appareil de la chaîne d'appareils. Les informations formatées dépendent d'au moins une variable. Les informations formatées permettant d'établir une correspondance entre une partie des variables et des identifiants. Les identifiants permettant de déterminer la valeur de la variable correspondante audit identifiant en tenant compte dudit identifiant et de ladite image.

De préférence, le système selon l'invention est tel que les informations formatées comprennent des paramètres d'au moins un modèle paramétrable dépendant des variables.

De préférence, le système selon l'invention est tel que la correspondance entre la partie concernée des variables et les identifiants est établie par une table de correspondance.

**Compatibilité des modèles paramétrables**

Les modèles paramétrables peuvent varier au fur et à mesure de la mise à jour successive des moyens de traitement d'image. De préférence dans le cas de cette variante de réalisation du système selon l'invention les informations formatées comprennent en outre des éléments d'identification des modèles paramétrables successivement mis en oeuvre.

**Compatibilité descendante des variables**

L'identifiant peut désigner un champ dont la signification physique et le contenu ont été définis, notamment dans un format du type Exif, postérieurement à la diffusion des moyens de traitement d'image. De préférence dans le cas de cette variante de réalisation du système selon l'invention, les moyens de traitement d'image permettent d'obtenir la valeur de champs dont la signification physique et/ou la valeur ont été définis postérieurement à la diffusion des moyens de traitement d'image.

**Compatibilité ascendante des variables**

Les identifiants peuvent désigner des champs dont la signification physique et le contenu ont été définis, notamment dans un format du type Exif, antérieurement à la diffusion des moyens de traitement d'image. Les images peuvent avoir une existence antérieure à la diffusion des moyens de traitement d'image. De préférence dans le cas de cette variante de réalisation du système selon l'invention, les moyens de traitement d'image permettent d'obtenir la valeur des champs désignés par les identifiants à partir de données relative à l'image.

De préférence, selon l'invention, les informations formatées comprennent en outre le nombre des variables.

Les informations formatées peuvent comprendre des paramètres de plusieurs types de modèles paramétrables. Les paramètres d'un type de modèle paramétrable sont identifiés par un élément d'identification de type de modèle paramétrable. De préférence dans le cas de cette variante de réalisation du système selon l'invention, les informations formatées comprennent en outre l'élément d'identification de type de modèle paramétrable.

De préférence, selon l'invention, le système est tel que les valeurs des paramètres du modèle paramétrable permettent d'identifier une fonction mathématique des variables. La fonction mathématique ainsi identifiée permet de modifier la qualité de l'image, en fonction de valeurs déterminées des variables.

De préférence, dans le système selon l'invention, au moins un des types de modèles de paramétrable, ci-après dénommé modèle paramétrable générique, est tel que les valeurs des paramètres du modèle paramétrable générique permettent d'identifier n'importe quelle fonction mathématique des variables.

La fonction mathématique ainsi identifiée permet de modifier la qualité de l'image, en fonction de valeurs déterminées des variables.

De préférence, dans le système selon l'invention, les informations formatées comprennent en outre des programmes informatiques et/ou des liens vers des programmes informatiques.

L'invention concerne également un système destiné à réduire la fréquence de mise à jour de moyens de traitement permettant de modifier la qualité d'au moins un plan couleur d'une image couleur. De préférence dans le cas de cette variante de réalisation du procédé selon l'invention, le plan couleur est caractérisé par une couleur déterminée. Les informations formatées comprennent en outre des données relatives à la couleur déterminée.

De préférence, selon l'invention, les données relatives à la couleur déterminée permettent en outre de déterminer la fraction des informations formatées qu'il convient de mettre en oeuvre pour modifier la qualité du plan couleur.

L'invention concerne également un système destiné à réduire la fréquence de mise à jour de moyens de traitement permettant de modifier la qualité d'images selon plusieurs défauts. De préférence dans le cas de cette variante de réalisation du système selon l'invention, les informations formatées comprennent en outre des données relatives à au moins un défaut déterminé.

De préférence, selon l'invention, les données relatives au défaut déterminé permettent en outre de déterminer la fraction des informations formatées qu'il convient de mettre en oeuvre pour modifier la qualité d'images selon le défaut déterminé.

**Description détaillée**

D'autres caractéristiques et avantages de l'invention apparaîtront à la lecture de la description des variantes de réalisation de l'invention données à titre d'exemple indicatif et non limitatif, et de :

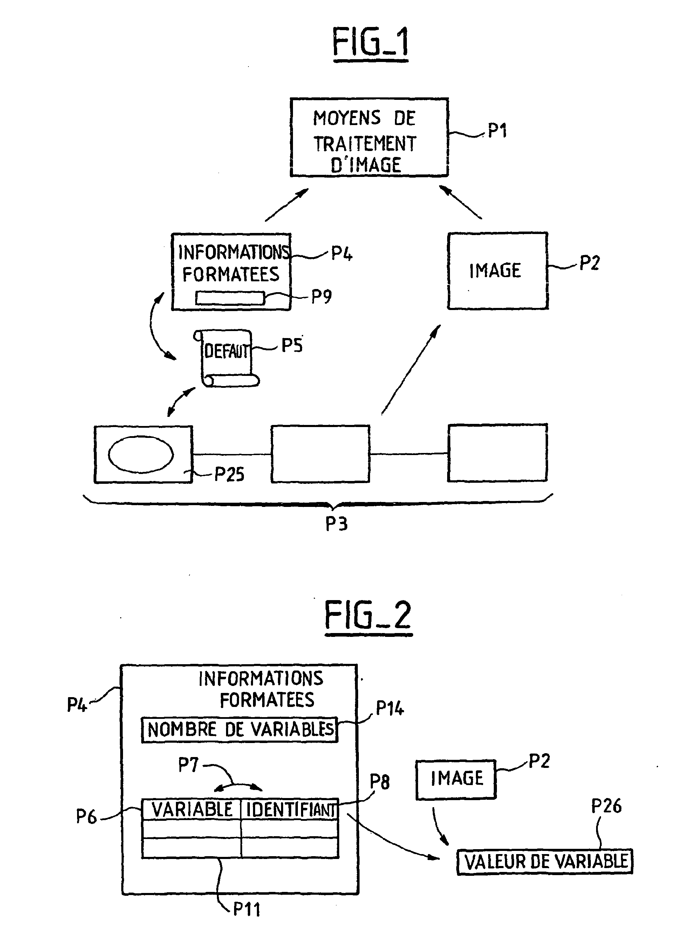

- la figure 1, qui représente une chaîne d'appareils P3 comportant notamment un appareil P25, une image P2 provenant de la chaîne d'appareils P3, des informations formatées P4, liées aux défauts P5 de l'appareil P25, des moyens de traitement d'images P1 mettant en oeuvre les informations formatées P4 et l'image P2,
- la figure 2, qui représente une image P2, des informations formatées P4 dépendantes d'au moins une variable P6, et permettant d'établir une correspondance P7 entre la variable P6 et un identifiant P8, une valeur P26 de la variable P6 obtenue en tenant compte de l'identifiant P8 et de l'image P2,

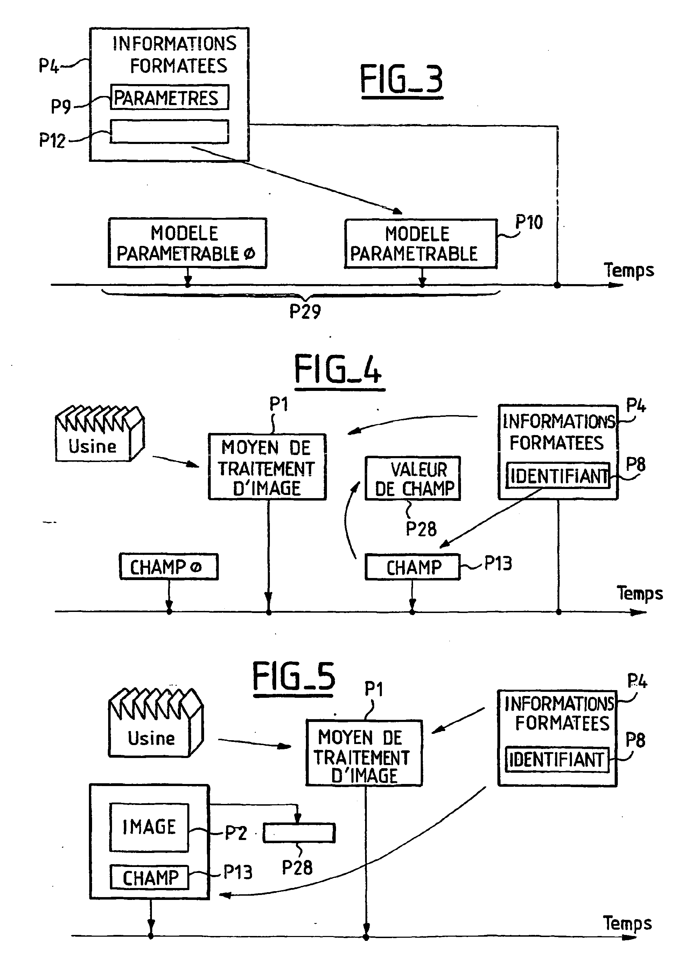

- la figure 3 qui représente des informations formatées P4 comprenant des paramètres P9 et des éléments d'identification des modèles paramétrables P12 permettant d' identifier un modèle paramétrable P10 parmi les modèles paramétrables successivement mis en oeuvre P29 dans le temps,
- la figure 4, qui représente des moyens de traitement d'images P1 diffusés avant que la signification physique ou le contenu d'un champ P13 ait été défini, des informations formatées P4 contenant un identifiant P8, une valeur de champ P28 déterminée par les moyens de traitement d'images P1,
- la figure 5, qui représente des moyens de traitement d'images P1 mis sur le marché postérieurement à l'existence de l'image P2 et après que la signification physique ou le contenu d'un champ P13 ait été défini, des informations formatées P4 contenant un identifiant P8, une valeur de champ P28 déterminée par les moyens de traitement d'images P1,

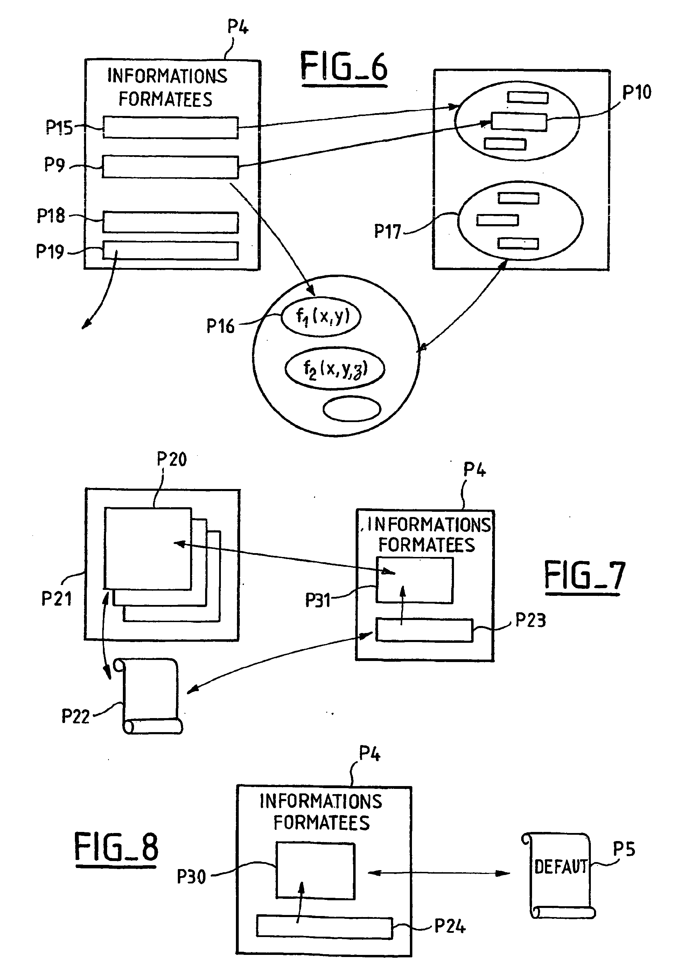

- la figure 6, qui représente des informations formatées P4 contenant des éléments d'identification de type de modèle paramétrable P15, des programmes informatiques P18, des liens vers des programmes informatiques P19, des paramètres P9 d'un modèle paramétrable P10, un modèle paramétrable générique P17, une fonction mathématique P16,
- la figure 7, qui représente une image couleur P21 constituée d'au moins un plan couleur P20 caractérisé par une couleur déterminée P22, des informations formatées P4 contenant des données relatives à la couleur déterminée P23 permettant de déterminer une fraction des informations formatées relatives à la couleur déterminée P31,
- la figure 8, qui représente des informations formatées P4 contenant des données relatives à un défaut déterminé P24 permettant de déterminer la fraction des informations formatées relative au défaut P30.

**Appareil**

En se référant notamment à la figure 1, on va décrire la notion d'appareil P25. Au sens de l'invention, un appareil P25 peut être notamment:

- un appareil de capture d'image, comme par exemple un appareil photo jetable, un appareil photo numérique, un appareil reflex, un scanner, un fax, un endoscope, un caméscope, une caméra de surveillante, un jouet, une caméra intégrée ou reliée à un téléphone, à un assistant personnel ou à un ordinateur, une caméra thermique, un appareil d'échographie,
- un appareil de restitution d'image comme par exemple un écran, un projecteur, un téléviseur, des lunettes de réalité virtuelle ou une imprimante,
- un appareil y compris son installation, par exemple un projecteur, un écran et la façon dont ils sont positionnés,
- le positionnement d'un observateur par rapport à un appareil de restitution, qui introduit notamment des erreurs de parallaxe,
- un être humain ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareil P25,

Un appareil P25 plus complexe comme un scanner/fax/imprimante, un Minilab d'impression photo, un appareil de vidéo-conférence peut être considéré comme un appareil P25 ou plusieurs appareils P25.

**Chaîne d'appareils**

En se référant notamment à la figure 1, on va maintenant décrire la notion de chaîne d'appareils P3. On appelle chaîne d'appareils P3 un ensemble d'appareils P25. La notion de chaîne d'appareils P3 peut en outre inclure une notion d'ordre.

Les exemples suivants constituent des chaînes d'appareils P3:

- un seul appareil P25,
- un appareil de capture d'image et un appareil de restitution d'image,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image,
- une combinaison des exemples précédents,
- un autre ensemble d'appareils P25.

**Défaut**

En se référant notamment à la figure 1, on va maintenant décrire la notion de défaut P5. On appelle défaut P5 de l'appareil P25, un défaut lié aux caractéristiques de l'optique et/ou du capteur et/ou de l'électronique et/ou du logiciel intégré à un appareil P25 ; des exemples de défauts P5 sont par exemple la distorsion, le flou, le vignetage, les aberrations chromatiques, le rendu des couleurs, l'uniformité du flash, le bruit du capteur, le grain, l'astigmatisme, l'aberration sphérique.

**Image**

En se référant notamment à la figure 1, on va maintenant décrire la notion d'image P2. On appelle image P2 une image numérique capturée ou modifiée ou restituée par un appareil P25. L'image P2 peut provenir d'un appareil P25 de la chaîne d'appareils P3. L'image P2 peut être destinée à un appareil P25 de la chaîne d'appareils P3. De manière plus générale l'image P2 peut provenir et/ou être destinée à la chaîne d'appareils P3. Dans le cas d'images animées, par exemple vidéo, constituées d'une séquence dans le temps d'images fixes, on appelle image P2 : une image fixe de la séquence d'images.

**Informations formatées**

En se référant notamment à la figure 1, on va maintenant décrire la notion d'informations formatées P4. On appelle informations formatées P4 des données liées aux défauts P5 d'un ou plusieurs appareils P25 de la chaîne d'appareils P3 et permettant à des moyens de traitement d'images P1 de modifier la qualité des images P2 en tenant compte des défauts P5 de l'appareil P25. Pour produire les informations formatées P4, on peut utiliser divers procédés et systèmes basés sur des mesures, et/ou des captures ou restitution de références, et/ou des simulations.

Pour produire les informations formatées P4, on peut par exemple utiliser le procédé et le système décrits dans la demande de brevet international déposée le même jour que la présente demande au nom de la société Vision IQ et sous le titre : "Procédé et système pour produire des informations formatées liées aux défauts des appareils d'une chaîne d'appareils et d'informations formatées destinées à des moyens de traitement d'image." Dans cette demande, il est décrit un procédé pour produire des informations formatées P4 liées aux défauts P5 des appareils P25 d'une chaîne d'appareils P3. Les informations formatées P4 sont destinées à des moyens de traitement d'image P1, notamment des logiciels, en vue de modifier la qualité des images traitées par les moyens de traitement d'image P1. La chaîne d'appareils P1 comprend notamment au moins un appareil de capture d'image et/ou au moins un moyen de restitution et/ou au moins un observateur. Le procédé comprend l'étape de produire des données caractérisant' des défauts P5 des appareils P25 de la chaîne d'appareils P3. Les données sont des informations formatées P4.

Pour produire les informations formatées P4, on peut par exemple utiliser le procédé et le système décrits dans la demande de brevet international déposée le même jour que la présente demande au nom de la société Vision IQ et sous le titre : "Procédé et système pour produire des informations formatées liées aux distorsions géométriques." Dans cette demande, il est décrit un procédé pour produire des informations formatées P4 liées aux appareils P25 d'une chaîne d'appareils P3. La chaîne d'appareils P3 comprend notamment au moins un appareil de capture d'image et/ou au moins un appareil de restitution d'image. Le procédé comprend l'étape de produire des informations formatées P4 liées aux distorsions géométriques d'au moins un appareil P25 de la chaîne.

De préférence, l'appareil P25 permettant de capturer

ou restituer une image sur un support. L'appareil P25 comporte au moins une caractéristique fixe et/ou une caractéristique variable selon l'image. La caractéristique fixe et/ou caractéristique variable est susceptible d'être associée à une ou plusieurs valeurs de caractéristiques, notamment la focale et/ou la mise au point et leurs valeurs de caractéristiques associées. Le procédé comprend l'étape de produire des informations formatées mesurées liées aux distorsions géométriques de l'appareil à partir d'un champ mesuré. Les informations formatées P4 peuvent comprendre les informations formatées mesurées.

Pour produire les informations formatées P4, on peut par exemple utiliser le procédé et le système décrits dans la demande de brevet international déposée le même jour que la présente demande au nom de la société Vision IQ et sous le titre : "Procédé et système pour produire des informations formatées liées aux défauts d'au moins un appareil d'une chaîne, notamment au flou ". Dans cette demande, il est décrit un procédé pour produire des informations formatées P4 liées aux appareils P25 d'une chaîne d'appareils P3. La chaîne d'appareils P3 comprend notamment au moins un appareil de capture d'image et/ou au moins un appareil de restitution d'image. Le procédé comprend l'étape de produire des informations formatées P4 liées aux défauts P5 d'au moins un appareil P25 de la chaîne. De préférence, l'appareil P25 permettant de capturer ou restituer une image comporte au moins une caractéristique fixe et/ou une caractéristique variable selon l'image (I). Les caractéristiques fixe et/ou variables sont susceptibles d'être associées à une ou plusieurs valeurs de caractéristiques, notamment la focale et/ou la mise au point et leurs valeurs de caractéristiques associées. Le procédé comprend l'étape de produire des informations formatées mesurées liées aux défauts P5 de l'appareil P25 à partir d'un champ mesuré. Les informations formatées P4 peuvent comprendre les informations formatées mesurées.

Pour fournir les informations formatées P4, on peut par exemple utiliser le procédé et le système décrits dans la demande de brevet international déposée le même jour que la présente demande au nom de la société Vision IQ et sous le titre : "Procédé et système pour fournir, selon un format standard, des informations formatées à des moyens de traitement d'images." Dans cette demande, il est décrit un procédé pour fournir, selon un format standard, des informations formatées P4 à des moyens de traitement d'images P1, notamment des logiciels et/ou des composants. Les informations formatées P4 sont liées aux défauts P5 d'une chaîne d'appareils P3. La chaîne d'appareils P3 comprend notamment au moins un appareil de capture d'image et/ou un appareil de restitution d'image. Les moyens de traitement d'images P1 utilisent les informations formatées P4 pour modifier la qualité d'au moins une image P2 provenant ou destinée à la chaîne d'appareils P3. Les informations formatées P4 comportent des données caractérisant des défauts P5 de l'appareil de capture d'image, notamment les caractéristiques de distorsion, et/ou des données caractérisant des défauts de l'appareil de restitution des images, notamment les caractéristiques de distorsion.

Le procédé comprend l'étape de renseigner au moins un champ du format standard avec les informations formatées P4. Le champ est désigné par un nom de champ. Le champ contenant au moins une valeur de champ.

Pour rechercher les informations formatées P4, on peut par exemple utiliser le procédé et le système décrits dans la demande de brevet international déposée le même jour que la présente demande au nom de la société Vision IQ et sous le titre : "Procédé et système pour modifier la qualité d'au moins une image provenant ou destinée à une chaîne d'appareils." Dans cette demande, il est décrit un procédé pour modifier la qualité d'au moins une image P2 provenant ou destinée à une chaîne d'appareils déterminée. La chaîne d'appareils déterminée comprend au moins un appareil de capture d'image et/ou au moins un appareil de restitution d'image. Les appareils de capture d'image et/ou les appareils de restitution d'image, progressivement mis sur le marché par des acteurs économiques distincts, appartiennent à un ensemble indéterminé d'appareils. Les appareils P25 de l'ensemble d'appareils présentent des défauts P5 qui peuvent être caractérisés par des informations formatées P4. Le procédé comprend, pour l'image concernée, les étapes suivantes :

- l'étape de répertorier des sources d'informations formatées relatives aux appareils P25 de l'ensemble d'appareils,
- l'étape de rechercher de manière automatique, parmi les informations formatées P4 ainsi répertoriées, des informations formatées spécifiques relatives à la chaîne d'appareils déterminée,
- l'étape de modifier de manière automatique l'image au moyen de logiciels de traitement d'images et/ou de composants de traitement d'images en tenant compte des informations formatées spécifiques ainsi obtenues.

Pour exploiter les informations formatées P4, on peut par exemple utiliser le procédé et le système décrits dans la demande de brevet international déposée le même jour que la présente demande au nom de la société Vision IQ et sous le titre : "Procédé et système pour calculer une image transformée à partir d'une image numérique et d'informations formatées relatives à une transformation géométrique." Dans cette demande, il est décrit un procédé pour calculer une image transformée à partir d'une image numérique et d'informations formatées P4 relatives à une transformation géométrique, notamment des informations formatées P4 relatives aux distorsions et/ou aberrations chromatiques d'une chaîne d'appareils P3. Le procédé comprend l'étape de calculer l'image transformée à partir d'une approximation de la transformation géométrique. Il en résulte que le calcul est économe en ressource mémoire, en bande passante mémoire, en puissance de calcul et donc en consommation électrique. Il en résulte également que l'image transformée ne présente pas de défaut visible ou gênant pour son utilisation ultérieure.

Pour exploiter les informations formatées P4, on peut par exemple utiliser le procédé et le système décrits dans la demande de brevet international déposée le même jour que la présente demande au nom de la société Vision IQ et sous le titre : "Procédé et système pour modifier une image numérique en prenant en compte son bruit." Dans cette demande, il est décrit un procédé pour calculer une image transformée à partir d'une image numérique et d'informations formatées P4 relatives à des défauts P5 d'une chaîne d'appareils P3. La chaîne d'appareils P3 comporte des appareils de capture d'image et/ou des appareils de restitution d'image. La chaîne d'appareils P3 comporté au moins un appareil P25. Le procédé comprend l'étape de déterminer automatiquement des données caractéristiques à partir des informations formatées P4 et/ou de l'image numérique. Il résulte de la combinaison des traits techniques que l'image transformée ne présente pas de défaut visible ou gênant, notamment de défauts liés au bruit, pour son utilisation ultérieure.

## Moyens de traitement d'images

En se référant notamment à la figure 1, on va maintenant décrire la notion de moyen de traitement d'images P1. Au sens de la présente invention, on appelle moyen de traitement d'images P1, par exemple un logiciel et/ou un composant et/ou un équipement et/ou un système permettant de modifier la qualité de l'image P2 en mettant en oeuvre des informations formatées P4, afin de produire une image modifiée. L'image modifiée peut être destinée à un second appareil de la chaîne d'appareils P3 distinct ou non de l'appareil P25, par exemple l'appareil suivant dans la chaîne d'appareils P3.

La modification de la qualité des images par les moyens de traitement d'images P1 peut consister par exemple à

- supprimer ou atténuer les défauts P5 d'un ou plusieurs appareils P25 de la chaîne d'appareils P3 dans l'image P2, et/ou
- modifier l'image P2 pour ajouter au moins un défaut P5 d'un ou plusieurs appareils P25 de la chaîne d'appareils P3 de sorte que l'image modifiée ressemble à une image capturée par le ou les appareils P25, et/ou
- modifier l'image P2 pour ajouter au moins un défaut P5 d'un ou plusieurs appareils P25 de la chaîne d'appareils P3 de sorte que la restitution de l'image modifiée ressemble à une image restituée par le ou les appareils P25, et/ou
- modifier l'image P2 en tenant compte des informations formatées P4 liées à des défauts P5 de vision de l'oeil d'un être humain P25 de la chaîne d'appareils P3 de sorte que la restitution de l'image modifiée soit perçue par l'oeil de l'être humain comme corrigée de tout ou partie des défauts P5.

On appelle algorithme de correction, le procédé mis en oeuvre par un moyen de traitement d'images P1 pour modifier la qualité des images selon le défaut P5.

Les moyens de traitement d'images P1 peuvent prendre diverses formes selon l'application.

Les moyens de traitement d'images P1 peuvent être intégrés, en tout ou partie, à l'appareil P25, comme dans les exemples suivants :

- un appareil de capture d'image qui produit des images modifiées, par exemple un appareil photo numérique qui intègre des moyens de traitement d'images P1,
- un appareil de restitution d'image qui affiche ou imprime des images modifiées, par exemple un projecteur vidéo incluant des moyens de traitement d'images P1,
- un appareil mixte qui corrige les défauts de ses éléments, par exemple un scanner / imprimante / télécopieur incluant des moyens de traitement d'images P1,
- un appareil de capture d'image professionnel qui produit des images modifiées, par exemple un endoscope incluant des moyens de traitement d'images P1,

Dans le cas où les moyens de traitement d'images P1 sont intégrés à l'appareil P25, en pratique l'appareil P25 corrige ses propres défauts P5, et les appareils P25 de la chaîne d'appareils P3 peuvent être déterminés par construction, par exemple dans un télécopieur : un scanner et une imprimante ; l'utilisateur peut toutefois n'utiliser qu'une partie des appareils P25 de la chaîne d'appareils P3, par exemple si le télécopieur peut aussi être utilisé comme une imprimante seule.

Les moyens de traitement d'images P1 peuvent être intégrés, en tout ou partie, à un ordinateur par exemple de la façon suivante :

- dans un système d'exploitation, par exemple de marque Windows ou Mac OS, pour modifier automatiquement la qualité des images provenant ou destinées à plusieurs appareils P25 variant selon l'image P2 et/ou dans le temps, par exemple des scanners, appareils photos, imprimantes ; la correction automatique peut avoir lieu par exemple lors de l'entrée de l'image P2 dans le système, ou lors d'une demande d'impression par l'utilisateur,
- dans une application de traitement d'images, par exemple Photoshop™, pour modifier automatiquement la qualité d'images provenant ou destinées à plusieurs appareils P25 variant selon l'image et/ou dans le temps, par exemple des scanners, appareils photos, imprimantes ; la correction automatique peut avoir lieu par exemple lorsque l'utilisateur active une commande de filtre dans Photoshop™,

- dans un appareil de tirage photo (par exemple Photofinishing ou Minilab en anglais), pour modifier automatiquement la qualité d'images provenant de plusieurs appareils photo variant selon l'image et/ou dans le temps, par exemple des jetables, appareils photos numériques, disques compacts ; la correction automatique peut prendre en compte les appareils photo ainsi que le scanner et l'imprimante intégrés et se faire au moment ou les travaux d'impression sont lancés,

- sur un serveur, par exemple sur Internet, pour modifier automatiquement la qualité d'images provenant de plusieurs appareils photo variant selon l'image et/ou dans le temps, par exemple des jetables, appareils photos numériques,; la correction automatique peut prendre en compte les appareils photo ainsi que par exemple une imprimante et se faire au moment ou les images P2 sont enregistrées sur le serveur, ou au moment où des travaux d'impression sont lancés.

Dans le cas où les moyens de traitement d'images P1 sont intégrés à un ordinateur, en pratique les moyens de traitement d'images P1 sont compatible de multiples appareils P25, et au moins un appareil P25 de la chaîne d'appareils P3 peut varier d'une image P2 à l'autre.

**Exposé du problème solutionné par la présente invention**

Dans la plupart des moyens de traitement d'images P1 cités, plusieurs acteurs économiques entrent en jeu : des fabricants d'appareils de capture d'image, des éditeurs de logiciel, des fabricants d'appareils de restitution.
D'autre part les informations formatées P4 relatives aux différents appareils P25 pourront être produites par divers acteurs économiques : le fabricant de l'appareil P25, un tiers spécialisé, l'utilisateur des moyens de traitement d'images P1.
D'autre part, les moyens de traitement d'images P1, peuvent prendre la forme de logiciels exécutés sur des matériels divers, notamment lorsque les moyens de traitement d'images P1 sont intégrés à l'appareil P25.
Enfin les informations formatées P4 peuvent être diffusées et/ou mises à jour de diverses façons :

- livrés avec les moyens de traitement d'images P1,
- livrés avec l'appareil P25 (sur un disque compact livré...),
- diffusés dans le même fichier que l'image P2 produite par l'appareil (de capture d'image) P25,
- diffusés au moyen d'une base de donnée centrale ou répartie.

Compte tenu du nombre d'acteurs économiques et surtout du nombre d'utilisateurs, il n'est pas possible de forcer tout le monde à faire des mise à jour simultanément des moyens de traitement d'images P1; l'ensemble des utilisateurs n'utiliseront donc pas la même version des moyens de traitement d'images P1.
D'autre part les futurs appareils P25 mis sur le marché peuvent avoir des défauts P5 plus complexes ou dépendant de caractéristiques variables nouvelles. Il n'est pas envisageable dans ce cas de demander des mises à jour des moyens de traitement d'images P1 à tous les utilisateurs.
Enfin certains moyens de traitement d'images P1 peuvent prendre en compte par exemple de nouveaux défauts P5, nouveaux formats d'images, nouveau modèle paramétrable P10. il faudra pouvoir déployer progressivement de nouveaux moyens de traitement d'images P1 en restant compatible des anciens moyens de traitement d'images P1.
D'où l'importance d'un format générique permettant d'échanger les informations formatées P4 entre les différents acteurs et de permettre aux divers logiciels de les produire ou de les utiliser. D'où l'importance d'inclure dans le format générique selon l'invention, la souplesse nécessaire à la description des défauts P5 d'appareils P25 pas encore sur le marché, afin de réduire la fréquence de mise à jour des moyens de traitement d'images P1 et notamment :

- d'éviter de devoir diffuser de nouveaux moyens de traitement d'images P1, lorsqu'un nouvel appareil P25, par exemple plus complexe, arrive sur le marché et,
- d'éviter de devoir faire évoluer les moyens de traitement d'images P1 pour les intégrer dans un nouvel appareil P25 comportant un processeur ou composant jamais utilisé auparavant. dans des moyens de traitement d'images P1.

L'invention comprend, dans le but de réduire la fréquence de mise à jour des moyens de traitement d'images P1, des mécanismes permettant d'assurer la compatibilité dans le temps entre informations formatées P4 et moyens de traitement d'images P1:

- de sorte qu'il est possible de produire des informations formatées P4 relatives à un nouvel appareil P25 même complexe, permettant à des moyens de traitement d'images P1 existants de modifier la qualité des images P2 en tenant compte des informations formatées P4 relatives à l'appareil P25,

- de sorte que le temps entre deux mises à jour des moyens de traitement P1 peut être espacé,
- de sorte que les divers acteurs économiques qui produisent des appareils P25 et/ou des moyens de traitement d'images P1 peuvent mettre à jour leurs produits indépendamment des autres acteurs économiques, même si ces derniers changent radicalement les caractéristiques de leurs produit ou ne peuvent forcer leur client à mettre à jour leur produits,
- de sorte qu'une nouvelle fonctionnalité peut être déployée progressivement en commençant par un nombre limité d'acteurs économiques et d'utilisateurs pionniers, en restant compatible des moyens de traitement d'images P1 déjà diffusés.

## Variable

On va maintenant décrire en s'appuyant sur la figure 2, la notion de variable P6. Selon l'invention, on appelle variable P6 un facteur mesurable et variable d'une image P2 à l'autre capturée, modifiée ou restituée par un même appareil P25, et ayant une influence sur le défaut P5 de l'image capturée, modifiée ou restituée par l'appareil P25, notamment :

- une variable globale, fixe pour une image P2 donnée, par exemple une caractéristique de l'appareil P25 au moment de la capture ou de restitution de l'image liée à un réglage de l'utilisateur ou liée à un automatisme de l'appareil P25,
- une variable locale, variable dans une image P2 donnée, par exemple des coordonnées x, y ou ro, theta dans l'image, permettant aux moyens de traitement d'images P1 d'appliquer un traitement local différent selon la zone de l'image.

N'est en général pas considéré comme une variable P6:

un facteur mesurable et variable d'un appareil P25 à l'autre mais fixe d'une image P2 à l'autre capturée, modifiée ou restituée par un même appareil P25, par exemple la focale pour un appareil P25 à focale fixe.

Les informations formatées P4 peuvent dépendre d'au moins une variable P6.
Par variable P6, on peut entendre notamment:

- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil P25,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,
- le gain du capteur,
- la compression,
- le contraste,
- un autre réglage appliqué par l'utilisateur de l'appareil P25, par exemple un mode de fonctionnement,
- un autre réglage automatique de l'appareil P25,
- une autre mesure réalisée par l'appareil P25.

**Valeur de variable**

On va maintenant décrire en s'appuyant sur la figure 2, la notion de valeur de variable P26. On appelle valeur de variable P26 la valeur de la variable P6 au moment de la capture, modification ou restitution d'une image déterminée.

**Correspondance entre une variable et un identifiant, table de correspondance, nombre de variables, champ, valeur de champ**

On va maintenant décrire en s'appuyant sur les figures 2, 4 et 5, la notion de correspondance P7, nombre de variables P14, identifiant P8, champ P13, valeur de champ P28. Les informations formatées P4 peuvent permettre d'établir une correspondance P7, par exemple en incluant une table de correspondance P11 ou un lien vers une table, entre une partie des variables P6 et un identifiant P8; la partie des variables P6 peut être choisie au moment de la production des informations formatées P4, par exemple de telle sorte que les informations formatées P4 permettent de modifier la qualité des image avec une précision déterminée ; en effet certaines variables P6 peuvent avoir une influence sur le défaut P5 plus faible que d'autres et faire l'approximation qu'elles sont constantes peut n'introduire qu'une erreur minime ; par exemple le réglage de mise au point peut n'avoir qu'une influence faible sur le défaut vignetage et pour cette raison ne pas faire partie de la partie des variables P6 en correspondance P7 avec un identifiant P8. Les informations formatées P4 peuvent également comprendre le nombre de variables P14 de la partie des variables P6 en correspondance P7 avec un identifiant P8.

Par exemple les identifiant P8 peuvent comprendre un type de source (format Exif, format Twain...) et un identifiant du champ P13 adapté à la source (un numéro du champ P13, le nom du champ P13...).

Les moyens de traitement d'images P1 peuvent ainsi déterminer la valeur d'une variable P26 correspondant à l'identifiant P8, notamment dans le cas où la signification physique et/ou le contenu de ladite variable P6 ne sont connus que postérieurement à la diffusion desdits moyens de traitement d'images P1.

Dans le cas où la source comprend des champs P13 nommés, comme dans l'exemple du format Exif, la correspondance P7 peut être codée en utilisant le nom du champ P13 de telle sorte que les moyens de traitement d'images P1 peuvent lire une valeur de champ P28 défini après la diffusion des moyens de traitement d'images P1 et ainsi déterminer la valeur de variable P26.

Le temps entre deux mises à jour des moyens de traitement d'images P1 peut ainsi être espacé ; les divers acteurs économiques qui produisent des appareils P25 et/ou des moyens de traitement d'images P1 peuvent mettre à jour leurs produits indépendamment des autres acteurs économiques, même si ces derniers changent radicalement les caractéristiques de leurs produit ou ne peuvent forcer leur client à mettre à jour leur produits; de sorte qu'une nouvelle fonctionnalité peut être déployée progressivement en commençant par un nombre limité d'acteurs économiques et d'utilisateurs pionniers. En particulier, dans l'exemple de la photographie, il y a de multiples acteurs économiques et de très nombreux utilisateurs il est donc impossible de synchroniser tout le monde.

Par exemple la correspondance P7 entre les variables P6 et les identifiant P8 peut prendre la forme d'une table de correspondance P11 contenant pour chaque variable P6 un type de source et un identifiant du champ P13 dans la source. Dans ce cas, pour déterminer la valeur de variable P26, les moyens de traitement d'images P1 peuvent par exemple aller chercher dans la source, l'un des champs P13 suivants:

- pour une photo numérique, un champ P13 au format Exif dans un fichier contenant l'image P2,
- pour une photo numérique, un sous-champ P13 dans le champ MakerNote du format Exif dans un fichier contenant l'image P2,
- un champ P13 propriétaire, dans un fichier contenant l'image P2 pour représenter des données telles qu'un déplacement du centre de l'image ou une rotation de l'image par rapport à l'image issue du capteur,
- un champ P13 provenant du pilote au format Twain d'un scanner,
- un champ P13 provenant du pilote d'une imprimante,
- un champ P13 provenant de données au format XMP,
- un champ P13 calculé à partir de l'image P2 elle-même par exemple le facteur de zoom appliqué à l'image P2, ou la focale.

Par exemple la table de correspondance P11 pour des informations formatées P4 relatives à l'appareil P25 peut indiquer que la variable P6 correspond au champ P13 Exif #212 ou que la variable P6 correspond à à donnée Twain #35 ; il est ainsi possible de retrouver la valeur de la variable P6 pour une image P2 donnée en lisant le champ P13 Exif #212 dans l'en tête du fichier contenant l'image P2 provenant d'un appareil photo numérique ou la valeur de la variable P6 en demandant la valeur de la donnée Twain #35 au pilote Twain d'un scanner, sans pour autant avoir besoin de savoir qu'il s'agit de la focale ou de la température.

Il est ainsi possible de modifier la qualité d'images P2, y compris ayant une existence antérieure à la diffusion des moyens de traitement d'images P1, si un fichier contenant l'image P2 contient aussi des données, par exemple le champ P13 Exif #212 ; Pour obtenir la valeur de champ P28, un moyen de traitement utilise l'identifiant P8 pour déterminer le nom du champ P13 et déterminer la valeur du champ P28 à partir du fichier contenant l'image P2 et ainsi déterminer la valeur de variable P26.

Une partie des variables P6 peuvent par exemple correspondre à une déformation géométrique (notamment une rotation, une translation ou un zoom numérique par rapport au capteur) appliquée à l'image P2. En conséquence, puisque les défauts P5 dépendent en général de la position sur le capteur, toute transformation géométrique appliquée à l'image entre le capteur et l'application d'un algorithme de correction doit être prise en compte dans la valeur de ladite partie desdites variables P6, notamment dans les cas suivants:

- dans l'appareil P25, en fonction du réglage de zoom appliqué par l'utilisateur, par exemple x1.5, un zoom numérique peut être appliqué qui a pour effet de n'utiliser qu'une partie de la surface de l'optique et du capteur et d'interpoler la valeur des pixels de l'image P2,
- dans l'appareil P25, en fonction du réglage appliqué par l'utilisateur pour choisir la résolution de l'image produite, par exemple 1280*1024 ou 1200x1600, une interpolation est effectuée pour obtenir la valeur des pixels de l'image P2,
- dans l'appareil P25, en fonction du réglage appliqué par l'utilisateur pour choisir la forme de l'image produite, par exemple 1 :1.33 ou 1 :1.5, l'image P2 est coupée,
- avant correction, un logiciel peut appliquer une rotation ou un redimensionnement,
- un moyen de traitement d'images P1 peut également modifier la taille de l'image P2; par exemple un algorithme de correction de distorsion déforme les bords d'une image P2 rectangulaire qui ne sont plus rectangulaires, et peut appliquer un zoom ou en couper les bords pour lui redonner sa taille et forme d'origine.

Il est donc nécessaire de garder la trace de ces traitements, et de combiner ces diverses informations pour obtenir les valeurs de variables P26, si on veut connaître par exemple le facteur de zoom appliqué à l'image par rapport au capteur et à l'optique, ce avant chaque algorithme de correction d'un défaut P5 dans les moyens de traitement d'images P1.

Dans le cas d'une chaîne d'appareils P3, chaque appareil P25 a ses propres variables P6, par exemple la focale.

### Modèle paramétrable, paramètres, fonction mathématique

On va maintenant décrire, en se référant notamment aux figures 3 et 6, la notion de paramètres P9, modèle paramétrable P10. Au sens de l'invention, on appelle modèle paramétrable P10 un modèle mathématique pouvant dépendre des variables P6 et relatif à un ou plusieurs défauts P5 de un ou plusieurs appareils P25 ; par exemple un modèle paramétrable P10 peut être relatif :

- au flou d'un appareil photo numérique,
- au vignetage d'un appareil photo auquel on veut ressembler,
- à la distorsion et aux aberrations chromatiques d'un projecteur,
- au flou d'un appareil photo jetable combiné avec un scanner.

Les informations formatées P4 relatives à un défaut P5 d'un appareil P25 peuvent se présenter sous la forme des paramètres P9 d'un modèle paramétrable P10 dépendant des variables P6; les paramètres P9 du modèle paramétrable P10 permettent d'identifier une fonction mathématique P16 dans un ensemble de fonctions mathématiques, par exemple des polynômes à plusieurs variables ; les fonctions mathématiques P16 permettent de modifier la qualité de l'image en fonction pour des valeurs déterminés des variables P6.

Dans la suite du document, on appelle LA1, LA2 des moyens de traitement d'images P1 diffusés successivement dans le temps et mettant en oeuvre des versions successives du format des informations formatées P4.

Chaque version des moyens de traitement d'images P1 peut correspondre à une évolution du format des informations formatées P4, c'est à dire des modèles paramétrables P10. Dans la suite du document, on appelle IF1APi, IF2APi des informations formatées P4, relatives à un appareil P25 appelé Api, diffusées successivement dans le temps et tirant parti des versions successives du format des informations formatées P4.

Dans la suite du document, on appellera AP0 un appareil P25 mis sur le marché avant LA1 et AP3 un appareil P25 mis sur le marché après LA2. Les variables P6 peuvent correspondre à des grandeurs physiques qui peuvent varier selon le type d'appareil P25. Par exemple, AP3 peut être le premier appareil P25 à avoir une distorsion qui dépend de la température, ce qui n'avait donc pas été testé avant la diffusion de LA2.

**Eléments d'identification des modèles paramétrables**

On va maintenant décrire, en se référant notamment à la figure 3, la notion d'éléments d'identification des modèles paramétrables P12. Les informations formatées P4 peuvent comprendre des éléments d'identification des modèles paramétrables P12, relatifs aux modèles paramétrables successivement mis en oeuvre P29 de sorte qu'il est possible d'identifier la fraction des informations formatées P4 relatives à des modèles paramétrables. P10 antérieurs à la diffusion de moyens de traitement d'images P1, de sorte qu'il y a compatibilité ascendante entre les informations formatées P4, de sorte qu'il y a compatibilité descendante entre les informations formatées P4.
Les exemples qui suivent permettent d'illustrer cette notion de compatibilité:

- exemple de compatibilité ascendante : LA2 pourra utiliser IF1AP0 pour corriger tout les défauts P5 présents dans IF1AP0,
- exemple de compatibilité descendante : LA1 pourra utiliser une partie de IF2AP3 pour corriger les défauts P5 pris en compte par LA1 mais pas les défauts P5 apparus plus récemment.

Il notamment possible d'utiliser les éléments d'identification des modèles paramétrables P12 pour mettre dans les informations formatées P4, deux représentations relatives à un même appareil P25:

- une représentation compatible uniquement des moyens de traitement P1 les plus récents, qui permet de modifier la qualité des images avec une bonne précision.
- une représentation compatible des anciens moyens de traitement P1, qui permet de modifier la qualité des images même si c'est avec une plus mauvaise précision.

Il ainsi possible de réduire la fréquence de mise à jour des moyens de traitement d'images P1.
Les exemples suivants illustrent des raisons pour lesquelles les modèles paramétrables P10 peuvent varier dans le temps:

- lesdits moyens de traitement P1 sont mis à jour pour prendre en compte un nouveau défaut P5 qui n'est pas représentable efficacement par les modèles paramétrables P10 existants,
- on a besoin d'un modèle paramétrable P10 plus souple pour représenter un défaut P5 pré existant d'appareils P25 atypiques, même s'il existe d'autres mécanismes pour réduire ce risque.

Les exemples suivants illustrent des évolution qui pourraient avoir lieu entre des modèles paramétrables successivement mis en oeuvre P29:

- on s'aperçoit que pour corriger le défaut P5 de distorsion d'un projecteur vidéo, il faut désactiver le recadrage automatique utilisé dans le cas d'un appareil de capture d'image et mettre au noir les zones en dehors de la zone correspondante à l'image P2 ; cette fonction peut être mise en oeuvre en ajoutant un paramètre P9 dans les informations formatées P4 et en faisant évoluer l'algorithme de correction des distorsions inclus dans les moyens de traitement d'images P1 ; par exemple seul LA2 intégrera cet algorithme de correction, et LA1 ne pourra donc pas corriger les distorsions d'un projecteur vidéo.
- ajout de fonctionnalités comme l'ajustement automatique du recadrage après correction des distorsions ou ajout d'un défaut P5,
- on ajoute un nouveau défaut P5 par exemple la couleur.

**Modèle paramétrable générique, fonction mathématique élémentaire, codage**

On va maintenant décrire, en se référant notamment à la figure 6, la notion de modèle paramétrables générique P17. La fonction mathématique P16 identifiée par les paramètres P9 du modèle paramétrable P10 peut s'écrire par exemple sous la forme mathématique :

$$r1, r2,...,rP = f(v1, v2, ..., vQ),$$

où Q est le nombre de variables P14, v1 à vQ sont les variables P6, f est la fonction mathématique P16, r1 à rP sont les résultats de la fonction mathématique P16.
La fonction mathématique P16 peut également s'écrire sous la forme d'une suite de fonction mathématiques élémentaires ayant chacune un seul résultat:

$$ri = fi(wi1 \; ; ... \; ; wiS),$$

où wil à wiS sont des parties des variables P6, i varie entre 1 et P.

Les exemples qui suivent décrivent des exemples de codage des paramètres P9 d'un modèle paramétrable P10 relatifs à une fonction mathématique élémentaire. La possibilité de choisir un codage parmi plusieurs disponibles au moment de la production des informations formatées P4 permet de produire des informations formatées P4 relatives à « tout » type d'appareil P25 de complexité arbitraire sans changer les moyens de traitement d'images P1 même si la modification de la qualité des images pour certains codages est un peu plus lente.

Une fonction mathématique élémentaire peut être codée de diverses façons dans les informations formatées P4, par exemple:

- sous la forme d'un polynômes (par exemple : nombre de variables P14 et pour chaque terme : coefficients et puissance des variables P6,
- sous la forme de points de mesure, par exemple pour plusieurs points : valeur ou plage de variables P6 pour certaines variables P6 et une fonction mathématique élémentaire des autres variables P6,
- comme une combinaison, sous la forme, notamment de somme pondérée, de fonctions mathématiques élémentaires,
- comme une expression formelle (exemple : v1^v2+ cos(v1)),
- comme un programme,
- comme un programmes, par exemple codé dans le langage Java, indépendant du processeur utilisé dans les moyens de traitement d'images P1.

Par exemple les codages suivants peuvent être utilisés pour coder une fonction mathématique élémentaire f (x,y,t) ou pour coder une approximation de celle-ci, comme une somme de fonctions simples:

- codage 1: les paramètres P9 peuvent comprendre notamment dans le cas où les fonctions mathématiques élémentaires sont des polynômes à plusieurs variables P6, une liste $\alpha i$, pxi, pyi, pti, des coefficients des termes dudit polynôme et des puissances de chaque variable P6 de chaque terme, de sorte que $f(x, y, t) = \Sigma \alpha i \, x^{pxi} \, y^{pyi} \, t^{pti}$ par exemple ((5,0,1,0), (9,1,1,1), (3,1,1,2)) est utilisé pour coder $5y+9xyt+3xyt^2$, le codage peut également comprendre le nombre de variables P14 et le nombre de termes,
- codage 2: on peut utiliser d'autres fonctions simples que des termes de polynômes, par exemple des paquets d'ondelettes ; des paramètres P9 peuvent décrire la base utilisé, d'autres les coefficients de la décomposition de f (x,y,t) selon cette base, un autre le nombre de variables P14.

On appelle modèle paramétrable générique P17 un modèle paramétrable P10 tel que les paramètres P9 dudit modèle paramétrables générique P17 permettent d'identifier n'importe quelle fonction mathématique P16 desdites variables P6, de sorte qu'il est possible de produire des informations formatées P4 relatives aux défauts P5 d'un appareil P25 de complexité arbitraire. Dans ce cas, les paramètres P9 peuvent inclure le nombre de variables P14 ainsi que par exemple pour une fonction f de 3 variables P6 x, y et t:

- codage 3 : une chaîne de caractères, par exemple 2*t*x^2+cos (y*t) *5^x,
- codage 4 : une liste de valeurs ou de plages de valeurs, par exemple ((2, 3, 1, 12), (5, 6, 2..5, 7), ...) pour représenter des points 12=f (2, 3, 1), 7=f (5, 6, a) pour a compris entre 2 et 5, ... ; dans ce cas, il est possible par interpolation de retrouver les valeurs des autres points absents de la liste, le cas échéant; des paramètres P9 pouvant en outre décrire le modèle d'interpolation à utiliser(linéaire, spline...),
- codage 5 : des instructions d'un langage informatique, par exemple le Java, permettant de calculer la fonction mathématique élémentaire,
- codage 6: une liste de ti, fi(x,y) pour représenter des points f (x, y, ti) =fi (x, y) où fi sont des fonctions mathématiques élémentaires de deux variables P6 pouvant elles-mêmes être codées selon un codage quelconque ; dans ce cas il est possible par interpolation de retrouver les valeurs des autres points pour les autres valeurs de t absents de la liste, le cas échéant; des paramètres P9 pouvant en outre décrire le modèle d'interpolation à utiliser ; ti peut dans une variante de réalisation désigner une plage de valeurs t pour lesquelles f (x, y, t) =fi (x, y) ,
- codage 7 : une liste de $\alpha i$, fi(x,y,z) pour représenter $f(x,y,t)= \Sigma \alpha i \, fi(x,y,t)$ où fi sont des fonctions mathématiques élémentaires de trois variables P6 pouvant être codées selon un codage quelconque.

Les codages ci-dessus ont été décrit avec un exemple de fonction à 3 variables P6 mais peuvent s'appliquer à un nombre quelconque de variables P6.

Dans le cas où la fonction mathématique élémentaire ne dépend d'aucune variable P6, un autre codage appelé codage 8 peut être utilisé qui se limite à une constante.

La possibilité de choisir le codage au moment de produire les informations formatées P4 permet de décrire les défauts P5 de tout type d'appareil P25, même complexe, et permet ainsi de réduire la fréquence de mise à jour des moyens de traitement d'images P1.

Le codage 4 peut être utilisé par exemple pour représenter une mesure brute, par exemple un champ mathématique lié à la distorsion, dans des informations formatées P4 que l'on peut appeler informations formatées mesurées ; les codages 1, 2, 3, 5, 6 peuvent être alors calculés, par exemple par interpolation, pour obtenir des informations formatées P4 que l'on peut appeler des informations formatées étendues ; enfin un codage similaire au codage 7 peut être calculé à partir du codage 6, lorsque l'on a déterminé la valeur d'une partie des variables P6.

**Constantes de configuration**

Un modèle paramétrable P10 peut être tel que certaines fonctions mathématiques élémentaires fi ne dépendent d'aucune variable locale ; on appelle ces fonctions mathématiques élémentaires fi qui ne dépendent d'aucune variable locale : constantes de configuration indépendantes de l'image P2. Ces constantes de configurations indépendantes de l'image permettent de d'adapter le comportement des moyens de traitement d'images P1 pour modifier la qualité des images relative au défaut P5 d'un appareil P25.

La fonction mathématique P16 peut donc être décomposées en un ensemble de constantes de configurations indépendantes de l'image et un ensemble de fonctions mathématiques élémentaires.

Les moyens de traitement d'images P1 peuvent être configurés de diverses manières à l'aide de constantes de configuration dont font partie les constantes de configuration indépendantes de l'image P2. Il convient de classer les constantes de configuration selon le moment où est fait le choix de leur valeur et le moment où elles sont utilisées.

Les constantes de configuration peuvent être utilisées:

- au moment où les informations formatées P4 sont produites, par exemple une précision de calibration,
- au moment où les informations formatées P4 sont utilisées par les moyens de traitement d'images, par exemple l'ordre de correction des défauts P5.

Les constantes de configuration peuvent selon le cas se présenter sous diverses formes :

- des constantes non modifiables indépendantes de l'appareil P25 et de l'image P2, par exemple dans un code informatique,
- un fichier de configuration contenant des constantes indépendantes de l'appareil P25 et de l'image P2, par exemple au format .ini,
- des valeurs de variables P26 dépendantes de l'appareil P25 et de l'image P2,
- des informations formatées P4 contenant des constantes de configuration indépendantes de l'image P2 et de l'appareil P25, et des fonctions mathématiques élémentaires dépendantes de l'appareil P5 et de l'image P2,
- un fichier de configuration liée à un utilisateur des moyens de traitement d'images P1 contenant par exemple des constantes indépendantes de l'appareil P25 et de l'image P2.

Les constantes de configuration peuvent être déterminées :

- au moment où les logiciels applicatifs sont produits (constantes dans le code, ou codage des algorithmes),
- au moment où les logiciels applicatifs sont configurés pour un client (fichier de configuration par exemple),
- au moment où les informations formatées P4 sont produites (et donc être indépendantes de l'image),
- au moment où la capture ou la restitution d'image a lieu par l'appareil P25,
- au moment où les informations formatées P4 sont utilisées par les moyens de traitement d'images P1.

Afin de réduire la fréquence de mise à jour des moyens de traitement d'images P1, il est préférable d'utiliser des constantes de configuration indépendantes de l'image P2 dans les informations formatées P4 qu'il est possible d'adapter à chaque appareil P25, plutôt que des constantes non modifiables ou un fichier de configuration.

En résumé :

- les constantes de configuration des algorithmes de production des informations formatées P4 (par exemple les seuils utiliser pour détecter les calottes pour la distorsion) sont déterminées et utilisées au moment de la production des informations formatées P4 (par exemple via un .ini),

- les constantes de configuration des moyens de traitement d'images P1 non modifiables ; elles sont déterminées par exemple au moment de la compilation des logiciels des moyens de traitement d'images P1 et utilisées au moment de la correction ; à éviter,
- les constantes de configuration indépendantes de l'image (par exemple l'ordre de correction, les types des modèles paramétrables P10 utilisés (polynôme ou Java), le type de bruit (analogique ou numérique), le type de capteur (CMOS/CCD), le modèle de flou (isotrope ou non), l'activation du redimensionnement automatique de l'image après une correction de distorsion) sont déterminées au moment de la production des informations formatées P4 et utilisée par les moyens de traitement d'images P1; elles sont présentes dans les informations formatées P4; il s'agit par exemple de modes de fonctionnements, de type de codage dépendant de l'appareil P25,
- la correspondance P7 entre les variables P6 et les identifiant P8 sont déterminées au moment de la production des informations formatées P4 et utilisée par les moyens de traitement d'images P1 ; elles sont présentes dans les informations formatées P4,
- la valeur variables P26 (par exemple la focale) sont déterminées au moment de la capture ou restitution de l'image et utilisées par les moyens de traitement d'images P1 (par exemple via Exif, Twain...),
- les constantes de configuration dépendant du client (par exemple une clef de cryptage...) ; elles sont déterminées au moment de la livraison des moyens de traitement d'images P1 et utilisées par les moyens de traitement d'images P1 (par exemple, elles peuvent être contenues dans un fichier de configuration),
- les constantes laissées au choix de l'utilisateur (par exemple les défauts P5 à corriger, la taille de l'image finale) ; elles sont déterminées et utilisées par les moyens de traitement d'images P1,
- les constantes de configuration des moyens de traitement d'images P1 non modifiables; elles sont déterminées avant la livraison des moyens de traitement d'images P1 et utilisées par les moyens de traitement d'images P1.

**Eléments d'identification de type de modèle paramétrable**

On va maintenant décrire, en se référant notamment à la figure 6, la notion d'éléments d'identification de type de modèle paramétrable P15. Les paramètres P9 du modèle paramétrable P10 peuvent alors se présenter sous la forme :

- de la représentation sous forme de codage de fonctions mathématiques élémentaires de variables P6,
- d'éléments d'identification de type de modèle paramétrable P15, pouvant consister en les codages utilisés pour représenter les fonctions mathématiques élémentaires.

Certaines fonctions mathématiques élémentaires peuvent correspondre à des constantes de configuration indépendantes de l'image.

On va maintenant décrire une variante de réalisation permettant d'introduire une grande compatibilité des moyens de traitement d'images P1 avec des informations formatées P4 relatives à un appareil P25 dont la commercialisation est postérieure à la diffusion du moyen de traitement d'images P1, ce qui permet de réduire la fréquence de mise à jour des moyens de traitement d'images P1.

Les algorithmes de correction ne voient que les constantes de configuration indépendantes de l'image et les fonctions mathématiques élémentaires. Les algorithmes de correction ne connaissent pas le nombre, ou la nature des variables globales.

Les algorithmes de correction ne connaissent pas la valeur des variables globales.

Les algorithmes de correction ne savent pas quel codage a été utilisé pour les fonctions mathématiques élémentaires, il ne peuvent qu'en calculer la valeur pour des valeurs de variables locales qu'ils choisissent, les valeurs des variables globales ayant été déterminées auparavant en utilisant la correspondance P7.

Les algorithmes de correction ne connaissent pas la nature ou le type des appareils P25 de la chaîne d'appareils P3.

Les algorithmes de correction ne savent pas quels traitements ont été appliqués auparavant sur l'image, et donc l'ordre d'appel des algorithmes de correction.

En outre, il existe plusieurs autres façons de rendre génériques les algorithmes de correction de moyens de traitement d'images P1 vis à vis des informations formatées P4 relatives à un défaut P5 d'un appareil P25 diffusé postérieurement aux moyens de traitement d'images P1 :

- une façon lente, très générique et pouvant nécessiter des informations formatées P4 peu compactes consiste à pouvoir coder dans le informations formatées P4 un programme informatique P18 ayant accès aux valeurs de variables P26 et à l'image P2,
- une autre façon consiste à pouvoir inclure dans les informations formatées P4 au moins un modèle paramétrable générique P17, par exemple codé en Java,

- une autre façon consiste à fournir une constante de configuration indépendante de l'image permettant de passer dans un mode qui peut être plus lent où les constantes non modifiables sont remplacées par des constantes de configuration indépendante de l'image,
- une autre façon consiste à utiliser des fonctions mathématiques élémentaires systématiquement et de n'utiliser aucune constante de configuration indépendante de l'image,
- une autre façon consiste à choisir des variables locales et des fonctions mathématiques élémentaires permettant de couvrir beaucoup de caractéristiques des défauts P5, par exemple dans le cas du flou, on peut imaginer de choisir une fonction f(x, y, z) permettant de fixer un noyau anisotrope pour chaque zone de l'image plutôt qu'une fonction f(x) permettant de fixer un noyau isotrope et commun à toutes les zones de l'image.

Il est ainsi possible de choisir le type de chaque modèle paramétrable P10 au moment de produire lesdites informations formatées P4.

Il est ainsi possible de calculer ladite fonction mathématique P16, au moment de modifier la qualité des images, pour le type du modèle paramétrable P10 utilisé lors de la production des informations formatées P4.

Une variante de réalisation peut par exemple mettre en oeuvre deux type de modèles paramétrables P10 utilisant, pour l'un, un codage avec des polynômes, et pour l'autre un codage avec des expressions mathématiques formelles.

Le choix du type de modèle utilisé au moment de produire les informations formatées P4 peut prendre en compte, en fonction de l'application, la qualité d'image souhaitée produite par les moyens de traitement d'images P1, le temps de calcul, la complexité du modèle paramétrable P10 nécessaire pour modéliser les défauts P5 d'un appareil P25.

Les informations formatées P4 peuvent également comprendre des programmes informatiques P18 et/ou des liens vers des programmes informatiques P19, de sorte qu'il est possible de diffuser des moyens de traitement d'images P1 appelant des sous-programmes informatiques contenus dans les informations formatées P4, permettant de modifier la qualité de l'image, notamment en traitant des défauts P5 définis après la diffusion desdits moyens de traitement P1.

Par exemple, le programme informatique P18 peut corriger un défaut P5 de l'image P2, il peut aussi n'effectuer qu'une partie des traitements, comme le calcul d'une fonction mathématique P16. Dans ce cas, on peut appeler :

- modèle paramétrable P10: le programme informatique P18,
- paramètres P9: les instructions dudit programme informatique P18.

Par lien vers des programmes informatiques P19, on peut entendre notamment:

- un appel distant,
- une adresse permettant de télécharger un programme.

Par exemple, dans le cas de la distorsion, l'algorithme de correction peut voir deux fonctions mathématiques élémentaires fx(x,y) et fy(x,y) permettant de calculer les coordonnées du point dans l'image correspondant à un point dans l'image modifiée, sans savoir s'il existe d'autres variables P6 que les variables locales x et y.

L'algorithme de correction voit également des constantes de configuration indépendantes de l'image comme par exemple :

- activation du recadrage automatique pour obtenir une image modifiée rectangulaire (activé dans le cas d'un appareil de capture mais pas dans le cas d'un appareil de restitution),
- activation du redimensionnement de l'image modifiée pour qu'elle ait la même taille que l'image.

L'algorithme de correction n'a aucun moyen de connaître la valeur de la focale ou les défauts P5 déjà pris en compte ou la taille de la mire ayant servi à calibrer.

Par exemple, dans le cas de la distorsion et de l'aberration chromatique et d'images P2 comprenant trois plans couleur P20 rouge, vert et bleu (RVB), l'algorithme de correction peut voir six fonctions mathématiques élémentaires fxR (x, y) , fyR (x, y) , fxV (x, y) , fyV (x, y) , fxB (x, y) , fyB (x, y) permettant de calculer les coordonnées du point dans un plan couleur P20 de l'image P2 correspondant à un point dans le plan couleur P20 correspondant de l'image modifiée, sans savoir s'il existe d'autres variables P6 que les variables locales x et y.

L'algorithme de correction voit également des constantes de configuration indépendantes de l'image comme par exemple :

- activation du recadrage automatique pour obtenir une image modifiée rectangulaire (activé dans le cas d'un appareil de capture mais pas dans le cas d'un appareil de restitution),
- activation du redimensionnement de l'image modifiée pour qu'elle ait la même taille que l'image.

L'algorithme de correction n'a aucun moyen de connaître la focale ou les défauts P5 déjà pris en compte ou la taille de la mire ayant servi à calibrer

Par exemple, dans le cas du vignetage, l'algorithme de correction peut voir une fonction mathématique élémentaire $f(d^2)$ permettant de calculer le gain à appliquer sur la luminance en fonction du carré de la distance à un point appelé centre, sans savoir s'il existe d'autres variables P6 que la variable locale d.

L'algorithme de correction voit également des constantes de configuration indépendantes de l'image comme par exemple les coordonnées du centre.

L'algorithme de correction n'a aucun moyen de connaître la focale ou les défauts P5 déjà pris en compte ou la taille de la mire ayant servi à calibrer.

Par exemple, dans le cas du flou, l'algorithme de correction peut voir pour chaque plan couleur P20 deux fonctions mathématiques élémentaires fX(x,y), fY(x,y) permettant de calculer pour un bloc de pixel de position x,y un noyau anisotrope selon deux axes X et Y, sans savoir s'il existe d'autres variables P6 que les variables locales x et y.

L'algorithme de correction voit également des constantes de configuration indépendantes de l'image comme par exemple le modèle de bruit utilisé (argentique ou numérique).

L'algorithme de correction n'a aucun moyen de connaître la focale ou les défauts P5 déjà pris en compte ou la taille de la mire ayant servi à calibrer.

De préférence, les algorithmes de correction choisis évitent d'appeler les fonctions mathématiques élémentaires pour chaque pixel. Ceci permet de pouvoir utiliser des codages plus génériques et plus lents, dans le cas d'appareils P25 complexes. Par exemple :

- dans le cas de la distorsion et/ou aberration chromatique, les fonctions mathématiques élémentaires peuvent n'être utilisées que pour les pixels d'une grille ; entre quatre points de la grille, une interpolation, par exemple bilinéaire, peut être utilisée,
- dans le cas du vignetage, la fonction mathématique élémentaire peut être utilisée pour calculer une table fonction de $d^2$,
- dans le cas du flou, la fonction mathématique peut être utilisée pour calculer le ou les noyaux.

**Image Couleur, plan couleur, couleur déterminée, donnée relative à une couleur déterminée**

On va maintenant décrire, en se référant notamment à la figure 7, la notion d'image couleur P21, de plan couleur P20, de couleur déterminée P22, de donnée relative à une couleur déterminée P23. La variante de réalisation décrite ci-après s'applique au cas où l'image P2 est une image couleur P21. L'image couleur P21 peut être décomposée en plans couleur P20 de diverses façons : nombre de plans (1, 3 ou plus) , précision (8 bits non signé, 16 bit signés, flottant...) et signification des plans (par rapport à un espace de couleur standard). L'image couleur P21 peut être décomposée de diverses façons en plans couleur P20: rouge, vert, bleu (RVB) ou luminance, saturation, teinte... ; d'autre part il existe des espaces de couleur tels PIM, ou des valeurs de pixels négatives sont possibles afin de permettre la représentation de couleurs soustractives qu'il n'est pas possible de représenter en RVB positif ; enfin il est, possible de coder une valeur de pixel sur 8bits, 16bits, ou en utilisant des valeurs flottantes. Les informations formatées P4 comprennent des données permettant de décomposer l'image P2 en plans couleur P20, compatibles des différents défauts P5 à traiter ; chaque plan couleur P20 étant caractérisé par une couleur déterminée P22 ; lesdites informations formatées P4 comprenant des données relatives à ladite couleur déterminée P23 ; lesdites données relatives à ladite couleur déterminée P23 permettant en outre de déterminer la fraction desdites informations formatées P4 qu'il convient de mettre en oeuvre pour modifier la qualité dudit plan couleur P20 ; de sorte que lesdits moyens de traitement d'images P1 peuvent calculer ledit plan couleur P20 pour une couleur déterminée P22 définie postérieurement à la diffusion desdits moyens de traitement d'images P1; de sorte que lesdits moyens de traitement d'images P1 peuvent appliquer un traitement particulier, notamment un traitement d'un niveau de flou, pour une couleur déterminée P22 définie postérieurement à la diffusion desdits moyens de traitement d'images P1; de sorte que l'on peut ainsi réduire la fréquence de mise à jour des moyens de traitement d'images P1.

Par exemple, on peut corriger le flou des appareils P25 actuels en utilisant des plans couleur P20 rouge, vert, bleu ; le procédé et le système permettent de corriger le flou d'un appareil P25 pour lequel une décomposition en luminance et saturation serait mieux adaptée.

Dans le cas d'un appareil P25 compatible du standard, PIM, il est possible de choisir par exemple de travailler en couleur positive sur 8 bits en espace X,Y,Z ou de travailler en 16 bits signés en espace RVB.

**Données relatives à un défaut déterminé**

On va maintenant décrire, en se référant notamment la figure 8, la notion de donnée relative à un défaut déterminé P24. Les informations formatées P4 peuvent comprendre des données relatives à au moins un défaut P5 déterminé, appelées données relatives à un défaut déterminé P24; les données relatives à un défaut déterminé P24 permettront de déterminer la fraction des informations formatées P4 qu'il convient de mettre en oeuvre pour modifier la qualité d'images selon ledit défaut P5 déterminé ; en pratique, les données relatives à un défaut déterminé P24 pourront prendre la forme d'un identifiant d'algorithme de correction, capable de corriger le défaut P5 déterminé.

De sorte que les moyens de traitement d'images P1 peuvent modifier la qualité d'images en utilisant des informations formatées P4 relatives à des défauts P5 dont au moins un des défauts P5 est défini postérieurement à la diffusion desdits moyens de traitement d'images P1 ; de sorte qu'il est ainsi possible de réduire la fréquence de mise à jour des moyens de traitement d'images P1.

Par exemple IF2AP3 comprend des données relatives à la distorsion, au vignetage et au flou ; LA1 ne sait corriger que le flou ; LA1 peut corriger le flou en utilisant IF2AP3 ; la taille du noyau, dans ce cas, ne doit pas dépendre du zoom appliqué par la distorsion.

Par exemple si une version des moyens de traitement d'images P1 sait traiter la distorsion mais pas le flou, cette version pourra extraire les informations formatées P4 relatives à la distorsion et ne traiter que celle-ci.

Un autre avantage pour un moyen de traitement d'images P1 pouvant traiter plusieurs défauts P5 consiste à pouvoir laisser le choix à l'utilisateur des défauts P5 à traiter, dans les limites liées à l'ordre tel que décrit ci-dessous.

**Variantes de réalisation**

En outre, les méthodes suivantes permettent de réduire le fréquence de mise à jour des moyens de traitement d'images P1

- les informations formatées P4 peuvent comprendre des informations permettant de déterminer l'ordre d'exécution par les moyens de traitement d'images P1 des algorithmes de correction, afin de pouvoir choisir l'ordre le mieux adapté à chaque appareil P25.
- les informations formatées P4 peuvent être indépendantes du type de processeur (8/16/32/64 bits, ordre des octets dans un mot) utilisé pour les produire ou les lire,
- les informations formatées P4 peuvent être stockées dans un fichier contenant également l'image P2 ou dans une base de données indexée par un identifiant de l'appareil P25,
- dans le cas où les informations formatées P4 sont enregistrées dans l'image, un index par exemple dans le champ commentaire peut permettre d'indiquer où se trouvent les informations formatées P4 (par exemple : type de champ et nom de champ), ceci permet de diffuser des moyens de traitement d'images P1 compatibles d'un futur standard de stockage des informations formatées P4 (champ au format Exif, un champ au format Tiff, données au format XMP, champ commentaire) .

**Exemple d'utilisation des avantages de l'invention**

Pour modifier la qualité d'une image P2, les moyens de traitement d'images P1 peuvent réaliser par exemple tout où partie des étapes suivantes :

- déterminer les appareils P25 ou des identifiant des appareils P25 de la chaîne d'appareils P3 par exemple en analysant des données associées à l'image P2 dans un fichier contenant l'image P2 ou à partir des moyens de chargement de l'image,
- rechercher les informations formatées P4 relatives aux défauts P5 de tout ou partie des appareils P25 de la chaîne d'appareils P3, par exemple dans le fichier contenant l'image P2

ou dans une base de données en utilisant les identifiant d'appareils P25 ainsi obtenus,

- utiliser les informations formatées P4 pour établir la correspondance P7 entre les variables P6 et des identifiant P8,
- déterminer la valeur de variables P26 ayant une influence sur les défauts P5, par exemple la focale, en utilisant les identifiant P8, par exemple en utilisant des données Exif présentes dans le fichier contenant l'image P2,
- combiner les informations formatées P4 de plusieurs appareils P25,
- sélectionner une partie des informations formatées P4 compatible desdits moyens de traitement d'images P1, en utilisant les éléments d'identification de modèle paramétrable P12,
- sélectionner une partie des informations formatées P4 relatives à une partie des défauts P5, en utilisant les données relatives à un défaut déterminé P24,
- charger l'image P2 et la décomposer en plans couleurs P20 selon les couleurs déterminées P22,
- identifier les fonctions mathématiques P16 en utilisant les paramètres P9 des modèles paramétrables P16 des informations formatées P4 ainsi obtenues,

- déterminer les constantes de configuration indépendantes de l'image et les fonctions mathématiques élémentaires et leur codage à partir des éléments d'identification de type de modèle paramétrable P15 et de la fonction mathématique P16,
- déterminer l'ordre des corrections à partir des informations formatées P4,
- modifier la qualité de l'image P2 pour obtenir l'image modifiée, en utilisant les algorithmes de correction dans l'ordre ainsi déterminé et les constantes de configuration indépendantes de l'image et les fonctions mathématiques élémentaires ; dans les applications grand public, la modification de la qualité des images doit être robuste, c'est à dire qu'il vaut mieux désactiver ou atténuer une correction, que de risquer de dégrader l'image P2 : par exemple, il vaut mieux enlever un peu moins de flou, mais ne pas dégrader le bruit ; il vaut mieux des couleurs un peu moins chaudes, mais qui paraissent naturelles.

Dans cette variante de réalisation, les informations formatées P4 peuvent être produites pour des appareils P25 complexes non connus au moment de la diffusion des moyens de traitement d'images P1 sans avoir besoin de mettre à jour les moyens de traitement d'images P1. Un exemple d'informations formatées P4 est donné ci-dessous:

appareil P25:

- identifiant de l'appareil,
- version des informations formatées relatives à l'appareil, par exemple une date,
- type d'informations formatées P4 (informations formatées mesurées, informations formatées étendues...),
  élément d'identification des modèles paramétrables P12:
- modèle paramétrable 2.0,
- modèle paramétrable 2.1,
  informations formatées P4 relatives au modèle paramétrable 2.0
- chargement de l'image : 16bits signés, couleurs déterminées P22 = RVB,
- correspondance P7 : v1 = Exif #212 ; v2 =. Zoom et crop obtenus à partir d'une table fonction de la taille de l'image,
- ordre correction: distorsion, flou,
- correction de distorsion: c1; f3 (v1, *, *) ; f5 (v2, *) ; sortie 8 bits RVB,
- correction de flou; c2; f2(v1,*,*),
  informations formatées P4 relatives au modèle paramétrable 2.1
- ... fonctions mathématiques élémentaires :

  -f1 : 3 variables P6, codage 1, termes: {(12.5;0;3;4); (199;1;1;1) },
  -f2 : 3 variables P6, codage 6, points: {(12.2; f3) ; (45.4 ;f4)},

- ... constantes de configuration
- c1 : 3 ; 2.5.

**Application de l'invention à la réduction de coût**

On appelle réduction de coût, un procédé et système pour diminuer le coût d'un appareil P25 ou d'une chaîne d'appareils P3, notamment le coût de l'optique d'un appareil ou d'une chaîne d'appareils; le procédé consistant à :

- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts P5.

Le procédé et système selon l'invention peut être utilisé pour diminuer le coût d'un appareil ou d'une chaîne d'appareils : on peut concevoir une optique numérique, produire des informations formatées P4 relatives aux défauts P5 de l'appareil ou à la chaîne d'appareils, utiliser ces informations formatées pour permettre à des moyens de traitement d'image P1, intégrés ou non, de modifier la qualité des images P2 provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

**Revendications**

1. Procédé faisant appel à des moyens de traitement d'images (P1), notamment un logiciel et/ou un composant ; lesdits moyens de traitement d'images (P1) permettant de modifier la qualité des images numériques provenant d'une, ou destinées à une, chaîne d'appareils (P3) ; ladite chaîne d'appareils (P3) comportant au moins un appareil de capture d'image et/ou a moins un appareil de restitution d'image ; lesdits moyens de traitement d'image (P1) mettant en oeuvre des informations formatées (P4) liées aux défauts (P5) d'au moins un appareil (P25) de ladite chaîne d'appareils (P3) ; un défaut étant lié aux caractéristiques de l'optique et/ou du capteur et/ou de l'électronique et/ou du logiciel intégré à un appareil, par exemple la distorsion, le flou, le vignetage, les aberrations chromatiques, le rendu des couleurs, l'uniformité du flash, le bruit du capteur, le grain, l'astigmatisme, l'aberration sphérique ; lesdites informations formatées (P4) dépendant d'au moins une variable (P6) constituée par un facteur mesurable et variable d'une image (P2) à l'autre capturée, modifiée ou restituée par un même appareil (P25) et ayant une influence sur le défaut (P5) de l'image capturée, modifiée ou restituée par l'appareil (P25) ; lesdites informations formatées (P4) permettant d'établir une correspondance (P7) entre une partie desdites variables (P6) et des identifiants (P8), les identifiants comprenant pour chaque variable un type de source et un identifiant de champ dans la source ; lesdits identifiants (P8) permettant aux moyens de traitement d'image de déterminer, la valeur de ladite variable (P26) correspondant audit identifiant (P8), en allant chercher le champ identifié dans la source.

2. Procédé selon la revendication 1 dans lequel, dans le cas où la chaîne d'appareil comporte au moins un appareil de capture d'images muni d'un capteur, on prend en compte, dans la valeur de la variable, toute transformation géométrique appliquée à l'image entre le capteur et l'application d'un algorithme de correction.

3. Procédé selon la revendication 1 ou 2 ; lesdites informations formatées (P4) comprenant des paramètres (P9) d'au moins un modèle paramétrable (P10) dépendant desdites variables (P6).

4. Procédé selon l'une quelconque des revendications 1 à 3 ; ladite correspondance (P7) entre ladite partie desdites variables (P6) et lesdits identifiants (P8) étant établie par une table de correspondance (P11).

5. Procédé selon l'une quelconque des revendications 3 ou 4 ; lesdits modèles paramétrables (P10) variant au fur et à mesure de la mise à jour successive desdits moyens de traitement d'image (P1) ; lesdites informations formatées (P4) comprenant en outre des éléments d'identification (P12) desdits modèles paramétrables successivement mis en oeuvre (P29) ;
de sorte qu'il est possible d'identifier la fraction des informations formatées relative à des modèles paramétrables (P10) antérieurs à la diffusion d'une version desdits moyens de traitement d'image (P1).

6. Procédé selon l'une quelconque des revendications 1 à 5 ; ledit identifiant (P8) désignant un champ (P13) dont la signification physique et le contenu ont été définis, notamment dans un format du type Exif, postérieurement à la diffusion desdits moyens de traitement d'image (P1) ; lesdits moyens de traitement d'image (P1) permettant d'obtenir la valeur de champs (P28) dont la signification physique et/ou la valeur ont été définis postérieurement à la diffusion desdits moyens de traitement d'image (P1) ; de sorte que lesdits moyens de traitement d'image (P1) permettent de déterminer la valeur (P26) de ladite variable correspondant audit identifiant (P8) en utilisant ladite correspondance (P7).

7. Procédé selon l'une quelconque des revendications 1 à 6 ; lesdits identifiants (P8) désignant des champs (P13) dont la signification physique et le contenu ont été définis, notamment dans un format du type Exif, antérieurement à la diffusion desdits moyens de traitement d'image (P1) ; lesdits images ayant une existence antérieure à la diffusion desdits moyens de traitement d'image (P1) ; lesdits moyens de traitement d'image (P1) permettant d'obtenir la valeur desdits champs (P13) désignés par lesdits identifiants (P8) à partir de données relative à ladite image (P2) ;
de sorte que lesdits moyens de traitement d'image (P1) permettent de déterminer la valeur (P26) de ladite variable correspondant audit identifiant (P8) en utilisant ladite correspondance (P7) ;
de sorte que lesdits moyens de traitement d'image permettent de modifier la qualité des images produites avant la diffusion desdits moyens de traitement.

8. Procédé selon !'une quelconque des revendications 3 à 7 ; lesdites informations formatées (P4) pouvant comprendre des paramètres de plusieurs types de modèles paramétrables (P10) ; les paramètres d'un type de modèle paramétrable étant identifiés par un élément d'identification de type de modèle paramétrable (P15) ; lesdites informations formatées (P4) comprenant en outre ledit élément d'identification de type de modèle paramétrable (P15) ;
de sorte qu'il est possible de choisir le type de modèle paramétrable (P10) au moment de produire lesdites informations formatées (P4).

9. Procédé selon l'une quelconque des revendications 3 à 8 ; ledit procédé étant tel que les valeurs desdits paramètres (P9) dudit modèle paramétrable (P10) permettent d'identifier une fonction mathématique (P16) desdites variables (P6) ; ladite fonction mathématique (P16) ainsi identifiée permettant de modifier la qualité de ladite image, en fonction de valeurs déterminées desdites variables (P6).

10. Procédé selon la revendication 8 ; au moins un des types de modèles de paramétrable, ci-après dénommé modèle paramétrable générique (P17), étant tel les valeurs des paramètres dudit modèle paramétrable générique (P17) permettent d'identifier n'importe quelle fonction mathématique desdites variables (P6) ; ladite fonction mathématique (P16) ainsi identifiée permettant de modifier la qualité de ladite image, en fonction de valeurs déterminées desdites variables (P6).

11. Procédé selon l'une quelconque des revendications 1 à 10; lesdites informations formatées (P4) comprenant en outre des programmes informatiques (P18) et/ou des liens vers des programmes informatiques (P19).

12. Procédé selon l'une quelconque des revendications 1 à 11 ; ledit procédé étant destiné à réduire la fréquence de mise à jour de moyens de traitement permettant de modifier la qualité d'images selon plusieurs défauts ; lesdites informations formatées (P4) comprenant en outre des données relatives à au moins un défaut prédéterminé (P24).

13. Procédé selon la revendication 12 ; lesdites données relatives audit défaut déterminé (P24) permettant en outre de déterminer la fraction desdites informations formatées (P30) qu'il convient de mettre en oeuvre pour modifier la qualité d'images selon ledit défaut déterminé ;
de sorte que lesdits moyens de traitement peuvent modifier la qualité d'images en utilisant des informations formatées relatives à des défauts dont au moins un des défauts est défini postérieurement à la diffusion desdits moyens de traitement.

14. Système faisant appel à des moyens de traitement d'images (P1), notamment un logiciel et/ou un composant ; lesdits moyens de traitement d'images (P1) permettant de modifier la qualité des images numériques provenant d'une, ou destinées à une, chaîne d'appareils (P3) ; ladite chaîne d'appareils (P3) comportant au moins un appareil de capture d'image et/ou au moins un appareil de restitution d'image ; lesdits moyens de traitement d'image (P1) mettant en oeuvre des informations formatées (P4) liées aux défauts (P5) d'au moins un appareil (P25) de ladite chaîne d'appareils (P3) ; un défaut lié aux caractéristiques de l'optique et/ou du capteur et/ou de l'électronique et/ou du logiciel intégré à un appareil P25 ; des exemples de défauts P5 sont par exemple la distorsion, le flou, le vignetage, les aberrations chromatiques, le rendu des couleurs, l'uniformité du flash, le bruit du capteur, le grain, l'astigmatisme, l'aberration sphérique ; lesdites informations formatées (P4) dépendant d'au moins une variable (P6) constituée par un facteur mesurable et variable d'une image (P2) à l'autre capturée, modifiée ou restituée par un même appareil (P25) et ayant une influence sur le défaut (P5) de l'image capturée, modifiée ou restituée par l'appareil (P25) ; lesdites informations formatées (P4) permettant d'établir une correspondance (P7) entre une partie desdites variables (P6) et des identifiants (P8), les identifiants comprenant pour chaque variable un type de source et un identifiant de champ dans la source ; lesdits identifiants (P8) permettant aux moyens de traitement d'image de déterminer la valeur de ladite variable (P26) correspondante audit identifiant (P8), en allant chercher le champ identifié dans la source.

15. Système selon la revendication 14 comportant au moins un appareil de capture muni d'un capteur, et comportant des moyens pour prendre en compte, dans la valeur de la variable, toute transformation géométrique appliquée à l'image entre le capteur et l'application d'un algorithme de correction.

16. Système selon la revendication 14 ou 15 ; lesdites informations formatées (P4) comprenant des paramètres (P9) d'au moins un modèle paramétrable (P10) dépendant desdites variables (P6).

17. Système selon l'une quelconque des revendications 14 à 16; ladite correspondance (P7) entre ladite partie desdites variables (P6) et lesdits identifiants (P8) étant établie par une table de correspondance (P11).

18. Système selon l'une quelconque des revendications 16 ou 17 ; lesdits modèles paramétrables (P10) variant au fur et à mesure de la mise à jour successive desdits moyens de traitement d'image (P1) ; lesdites informations formatées (P4) comprenant en outre des éléments d'identification (P12) desdits modèles paramétrables successivement mis en oeuvre (P29).

**19.** Système selon l'une quelconque des revendications 14 à 18 ; ledit identifiant désignant un champ (P13) dont la signification physique et le contenu ont été définis, notamment dans un format du type Exif, postérieurement à la diffusion desdits moyens de traitement d'image (P1) ; lesdits moyens de traitement d'image (P1) permettant d'obtenir la valeur de champs (P28) dont la signification physique et/ou la valeur ont été définis postérieurement à la diffusion desdits moyens de traitement d'image (P1).

**20.** Système selon l'une quelconque des revendications 14 à 19 ; lesdits identifiants (P8) désignant des champs (P13) dont la signification physique et le contenu ont été définis, notamment dans un format du type Exif, antérieurement à la diffusion desdits moyens de traitement d'image ; lesdites images ayant une existence antérieure à la diffusion desdits moyens de traitement d'image (P1) ; lesdits moyens de traitement d'image (P1) permettant d'obtenir la valeur desdits champs (P13) désignés par lesdits identifiants (P8) à partir de données relatives à ladite image (P2).

**21.** Système selon l'une quelconque des revendications 16 à 20; lesdites informations formatées (P4) pouvant comprendre des paramètres de plusieurs types de modèles paramétrables (P10) ; les paramètres d'un type de modèle paramétrable étant identifiés par un élément d'identification de type de modèle paramétrable (P15) ; lesdites informations formatées (P4) comprenant en outre ledit élément d'identification de type de modèle paramétrable (P15).

**22.** Système selon l'une quelconque des revendications 16 à 21 ; ledit système étant tel que les valeurs desdits paramètres (P9) dudit modèle paramétrable (P10) permettent d'identifier une fonction mathématique (P16) desdites variables (P6) ; ladite fonction mathématique (P16) ainsi identifiée permettant de modifier la qualité de ladite image, en fonction de valeurs déterminées desdites variables (P6).

**23.** Système selon la revendication 22 ; au moins un des types de modèles de paramétrable, ci-après dénommé modèle paramétrable générique (P17), étant tel les valeurs des paramètres dudit modèle paramétrable générique (P17) permettent d'identifier n'importe quelle fonction mathématique desdites variables (P6) ; ladite fonction mathématique (P16) ainsi identifiée permettant de modifier la qualité de ladite image, en fonction de valeurs déterminées desdites variables (P6).

**24.** Système selon l'une quelconque des revendications 14 à 23; lesdites informations formatées (P4) comprenant en outre des programmes informatiques (P18) et/ou des liens vers des programmes informatiques (P19).

**25.** Système selon l'une quelconque des revendications 14 à 24 ; ledit système étant destiné à réduire la fréquence de mise à jour de moyens de traitement permettant de modifier la qualité d'images selon plusieurs défauts ; lesdites informations formatées (P4) comprenant en outre des données relatives à au moins un défaut déterminé (P24).

**26.** Système selon la revendication 24 ; lesdites données relatives audit défaut déterminé (P24) permettant en outre de déterminer la fraction desdites informations formatées (P30) qu'il convient de mettre en oeuvre pour modifier la qualité d'images selon ledit défaut déterminé.

**Claims**

**1.** A method requiring image-processing means (P1), especially software and/or a component : the said image-processing means (P1) making it possible to modify the quality of digital images derived from or addressed to an appliance chain (P3); the said appliance chain (P3) including at least one image-capture appliance and/or at least one image-restitution appliance; the said image-processing means (P1) employing formatted information (P4) related to the defects (P5) of at least one appliance (P25) of the said appliance chain (P3); a defect being related to the characteristics of the optical system and/or of the sensor and/or of the electronic unit and/or of the software integrated in an appliance; for example distortion, blurring, vignetting, chromatic aberrations, rendering of colors, flash uniformity, sensor noise, grain, astigmatism, spherical aberration; the said formatted information (P4) depending on at least one variable (P6) made up by a measurable factor variable from one image to another image that has been captured, modified or restituted by a same appliance (P25) and having an influence on the defect (P5) on the image that has been captured, modified or restituted by the appliance; the said formatted information (P4) making it possible to establish a correspondence (P7) between one part of the said variables (P6) and of the identifiers (P8), the identifiers including for each variable a type of source and an identifier of field in the source; its being possible for the image-processing means by means of the said identifiers (P8) to determine the value (P26) of the said variable corresponding to the said identifier (P8) by launching a search for the identified field in the source.

**2.** A method according to claim 1, wherein the appliance chain includes at least an image-capture appliance with a sensor, the value of the variable takes into account any geometric transformation applied to the image between the sensor and the application of a correction algorithm.

**3.** A method according to claim 1 or 2; the said formatted information (P4) including parameters (P9) of at least one parameterizable model (P10) depending on the said variables (P6).

**4.** A method according to any one of claims 1 to 3; the said correspondence (P7) between the said part of the said variables (P6) and the said identifiers (P8) being established by a correspondence table (P11).

**5.** A method according to any one of claims 3 or 4; the said parameterizable models (P10) varying in a manner reflecting the successive updates of the said image-processing means (P1); the said formatted information (P4) additionally including identification elements (P12) for the said successively employed parameterizable models (P29); in such a way that it is possible to identify the fraction of formatted information related to parameterizable models (P10) that existed prior to distribution of a version of the said image-processing means (P1).

**6.** A method according to any one of claims 1 to 5; the said identifier (P8) designating a field (P13) whose physical significance and content were defined, especially in a format of the Exif type, after the distribution of the said image-processing means (P1); the said image-processing means (P1) making it possible to obtain the value (P28) of fields whose physical significance and/or value were defined after distribution of the image-processing means (P1); in such a way that the said image-processing means (P1) make it possible to determine the value (P26) of the said variable corresponding to the said identifier (P8) by using the said correspondence (P7).

**7.** A method according to any one of claims 1 to 6; the said identifiers (P8) designating fields (P13) whose physical significance and content were defined, especially in a format of the Exif type, prior to the distribution of the said image-processing means (P1); the said images having an existence prior to the distribution of the said image-processing means (P1); the said image-processing means (P1) making it possible to obtain the value of the said fields (P13) designated by the said identifiers (P8) from data related to the said image (P2); in such a way that the said image-processing means (P1) make it possible to determine the value (P26) of the said variable corresponding to the said identifier (P8) by using the said correspondence (P7); in such a way that the said image-processing means can modify the quality of images produced before distribution of the said processing means.

**8.** A method according to any one of claims 3 to 7; the said formatted information (P4) being able to include parameters of a plurality of types of parameterizable models (P10); the parameters of a type of parameterizable model being identified by an identification element (P15) for the type of parameterizable model; the said formatted information (P4) additionally including the said identification element (P15) for the type of parameterizable model; in such a way that it is possible to choose the type of parameterizable model (P10) at the moment of production of the said formatted information (P4).

**9.** A method according to any one of claims 3 to 8; the said method being such that the values of the said parameters (P9) of the said parameterizable model (P10) make it possible to identify a mathematical function (P16) of the said variables (P6); the said mathematical function (P16) identified in this way making it possible to modify the quality of the said image as a function of specified values of the said variables (P6).

**10.** A method according to claim 8; at least one of the types of parameterizable model, referred to hereinafter as generic parameterizable model (P17), being such that the values of the parameters of the said generic parameterizable model (P17) make it possible to identify any mathematical function whatsoever of the said variables (P6); the said mathematical function (P16) identified in this way making it possible to modify the quality of the said image as a function of specified values of the said variables (P6).

**11.** A method according to any one of claims 1 to 10; the said formatted information (P4) additionally including data-processing programs (P18) and/or links (P19) to data-processing programs.

**12.** A method according to any one of claims 1 to 11; the said method being designed to reduce the frequency of updating of processing means with which image quality can be modified depending on a plurality of defects; the said formatted information (P4) additionally including data (P24) related to at least one specified defect.

13. A method according to claim 12; the said data (P24) related to the said specified defect additionally making it possible to determine the fraction (P30) of the said formatted information that can be appropriately employed to modify image quality depending on the said specified defect;

in such a way that the said processing means can modify image quality by using formatted information related to defects, at least one defect of which was defined after distribution of the said processing means.

14. A system requiring image-processing means (P1), especially software and/or a component: the said image-processing means (P1) making it possible to modify the quality of digital images derived from or addressed to an appliance chain (P3); the said appliance chain (P3) including at least one image-capture appliance and/or at least one image-restitution appliance; the said image-processing means (P1) employing formatted information (P4) related to the defects (P5) of at least one appliance (P25) of the said appliance chain (P3); a defect being related to the characteristics of the optical system and/or of the sensor and/or of the electronic unit and/or of the software integrated in an appliance; for example distortion, blurring, vignetting, chromatic aberrations, rendering of colors, flash uniformity, sensor noise, grain, astigmatism, spherical aberration; the said formatted information (P4) depending on at least one variable (P6) made up by a measurable factor variable from one image to another image that has been captured, modified or restituted by a same appliance (P25) and having an influence on the defect (P5) on the image that has been captured, modified or restituted by the appliance; the said formatted information (P4) making it possible to establish a correspondence (P7) between one part of the said variables (P6) and of the identifiers (P8), the identifiers including for each variable a type of source and an identifier of field in the source; its being possible for the image-processing means by means of the said identifiers (P8) to determine the value (P26) of the said variable corresponding to the said identifier (P8) by launching a search for the identified field in the source.

15. A system according to claim 14, wherein the appliance chain includes at least an image-capture appliance with a sensor, the value of the variable takes into account any geometric transformation applied to the image between the sensor and the application of a correction algorithm.

16. A system according to claim 14 or 15; the said formatted information (P4) including parameters (P9) of at least one parameterizable model (P10) depending on the said variables (P6).

17. A system according to any one of claims 14 to 16; the said correspondence (P7) between the said part of the said variables (P6) and the said identifiers (P8) being established by a correspondence table (P11).

18. A system according to any one of claims 16 or 17; the said parameterizable models (P10) varying in a manner reflecting the successive updates of the said image-processing means (P1); the said formatted information (P4) additionally including identification elements (P12) for the said successively employed parameterizable models (P29).

19. A system according to any one of claims 14 to 18; the said identifier designating a field (P13) whose physical significance and content were defined, especially in a format of the Exif type, after the distribution of the said image-processing means (P1); the said image-processing means (P1) making it possible to obtain the value (P28) of fields whose physical significance and/or value were defined after distribution of the image-processing means (P1).

20. A system according to any one of claims 14 to 19; the said identifiers (P8) designating fields (P13) whose physical significance and content were defined, especially in a format of the Exif type, prior to the distribution of the said image-processing means; the said images having an existence prior to the distribution of the said image-processing means (P1); the said image-processing means (P1) making it possible to obtain the value of the said fields (P13) designated by the said identifiers (P8) from data related to the said image (P2).

21. A system according to any one of claims 16 to 20; the said formatted information (P4) being able to include parameters of a plurality of types of parameterizable models (P10); the parameters of a type of parameterizable model being identified by an identification element (P15) for the type of parameterizable model; the said formatted information (P4) additionally including the said identification element (P15) for the type of parameterizable model.

22. A system according to any one of claims 16 to 21; the said system being such that the values of the said parameters (P9) of the said parameterizable model (P10) make it possible to identify a mathematical function (P16) of the said variables (P6); the said mathematical function (P16) identified in this way making it possible to modify the quality of the said image as a function of specified values of the said variables (P6).

23. A system according to claim 22; at least one of the types of parameterizable model, referred to hereinafter as generic parameterizable model (P17), being such that the values of the parameters of the said generic parameterizable model (P17) make it possible to identify any mathematical function whatsoever of the said variables (P6); the said mathematical function (P16) identified in this way making it possible to modify the quality of the said image as a function of specified values of the said variables (P6).

24. A system according to any one of claims 14 to 23; the said formatted information (P4) additionally including data-processing programs (P18) and/or links (P19) to data-processing programs.

25. A system according to any one of claims 14 to 24; the said system being designed to reduce the frequency of updating of processing means with which image quality can be modified depending on a plurality of defects; the said formatted information (P4) additionally including data (P24) related to at least one specified defect.

26. A system according to claim 24; the said data (P24) related to the said specified defect additionally making it possible to determine the fraction (P30) of the said formatted information that can be appropriately employed to modify image quality depending on the said specified defect.

**Patentansprüche**

1. Verfahren, das sich Bildverarbeitungsvorrichtungen (P1) und dabei vor allem einer Software und/ oder einer Komponente bedient;
die besagten Bildverarbeitungsvorrichtungen (P1) ermöglichen es dabei, die Qualität von digitalen Bildern zu ändern, die von einer Gerätekette (P3) kommen oder für diese bestimmt sind; die besagte Gerätekette (P3) enthält dabei zumindest eine Bilderfassungseinrichtung und/ oder zumindest eine Bildwiedergabeeinrichtung; die besagten Bildverarbeitungsvorrichtungen (P1) setzen dabei formatierte Informationen (P4) im Zusammenhang mit Fehlern (P5) zumindest eines Gerätes (P25) der besagten Gerätekette (P3) um; ein Fehler bezieht sich dabei auf die Merkmale der Optik und/ oder des Sensors und/ oder der Elektronik und/ oder der integrierten Software eines Gerätes, wie beispielsweise Verzerrung, Unschärfe, Vignettierung, Farbenabweichung, Farbwiedergabe, Gleichförmigkeit der Blitzausleuchtung, Sensorrauschen, Körnung, Astigmatismus, sphärische Aberration; die besagten formatierten Informationen (P4) hängen dabei zumindest von einer Variablen (P6) ab, die von einem messbaren Faktor gebildet wird, und die je nach den verschiedenen, vom selben Gerät (P25) erfassten, veränderten oder wiedergegebenen Bildern (P2) unterschiedlich ist, und die einen Einfluss auf den Fehler (P5) des vom Gerät (P25) erfassten, veränderten oder wiedergegebenen Bild ausübt; die besagten formatierten Informationen (P4) ermöglichen es, eine Übereinstimmung (P7) zwischen einem Teil der besagten Variablen (P6) und den Merkmalen (P8) zu erstellen, wobei die Merkmale für jede Variable einen Quellentyp und ein Feldmerkmal in der Quelle enthält; die besagten Merkmale (P8) ermöglichen es den Bildverarbeitungsvorrichtungen, den Wert der besagten Variablen (P26) zu bestimmen, die dem besagten Merkmal (P8) entspricht, indem sie das identifizierte Feld aus der Quelle holen.

2. Verfahren nach Anspruch 1, bei dem, falls die Gerätekette zumindest eine Bilderfassungseinrichtung mit einem Sensor enthält, beim Wert der Variablen jede geometrische Umwandlung berücksichtigt wird, die zwischen dem Sensor und der Anwendung eines Korrekturalgorithmus auf das Bild angewandt wird.

3. Verfahren nach Anspruch 1 oder 2; die besagten formatierten Informationen (P4) enthalten dabei Parameter (P9) zumindest eines parametrierbaren Modells (P10), das von den besagten Variablen (P6) abhängt.

4. Verfahren nach irgendeinem der Ansprüche 1 bis 3; die besagte Übereinstimmung zwischen dem besagten Teil der besagten Variablen (P6) und den besagten Merkmalen (P8) wird dabei durch eine Übereinstimmungstabelle (P11) erstellt.

5. Verfahren nach irgendeinem der Ansprüche 3 oder 4; die besagten parametrierbaren Modelle (P10) variieren dabei je nach sukzessiver Aktualisierung der besagten Bildverarbeitungsvorrichtungen (P1); die besagten formatierten Informationen (P4) enthalten dabei darüber hinaus Identifizierungselemente (P12) der besagten parametrierbaren Modelle, die nach und nach angewandt werden (P29);
sodass es möglich ist, den Bruchteil der formatierten Informationen in Bezug auf parametrierbare Modelle (P10) vor der Verbreitung einer Version der besagten Bildverarbeitungsvorrichtungen (P1) zu identifizieren.

6. Verfahren nach irgendeinem der Ansprüche 1 bis 5; das besagte Merkmal (P8) bezeichnet dabei ein Feld (P13), dessen physische Bedeutung und Inhalt speziell in einem Format vom Typ Exif nach der Verbreitung der besagten Bildverarbeitungsvorrichtungen (P1) definiert wurden; die besagten Bildverarbeitungsvorrichtungen (P1) ermöglichen dabei den Erhalt des Feldwertes (P28), dessen physische Bedeutung und/ oder Wert nach der Verbreitung der besagten Bildverarbeitungsvorrichtungen (P1) definiert wurden;

sodass es die besagten Bildverarbeitungsvorrichtungen (P1) ermöglichen, den Wert (P26) der besagten Variablen zu bestimmen, die dem besagten Merkmal (P8) entspricht, indem sie die besagte Übereinstimmung (P7) verwenden.

7. Verfahren nach irgendeinem der Ansprüche 1 bis 6; die besagten Merkmale (P8), bezeichnen dabei die Felder (P13), deren physische Bedeutung und Inhalt speziell in einem Format vom Typ Exif vor der Verbreitung der besagten Bildverarbeitungsvorrichtungen (P1) definiert wurden; die besagten Bilder weisen dabei eine Existenz vor der Verbreitung der besagten Bildverarbeitungsvorrichtungen (P1) auf; die besagten Bildverarbeitungsvorrichtungen (P1) ermöglichen es, den Wert der besagten Felder (P13) zu erhalten, die von den besagten Merkmalen (P8) ausgehend von den Daten in Bezug auf das besagte Bild (P2) benannt werden;

sodass es die besagten Bildverarbeitungsvorrichtungen (P1) ermöglichen, den Wert (P26) der besagten Variablen zu bestimmen, die dem besagten Merkmal (P8) entspricht, indem sie die besagte Übereinstimmung (P7) verwenden. sodass es die besagten Bildverarbeitungsvorrichtungen ermöglichen, die Qualität jener Bilder zu verändern, die vor der Verbreitung der besagten Bildverarbeitungsvorrichtungen erzeugt worden sind.

8. Verfahren nach irgendeinem der Ansprüche 3 bis 7; die besagten formatierten Informationen (P4) können dabei Parameter verschiedener Arten von parametrierbaren Modellen (P10) enthalten; die Parameter eines parametrierbaren Modelltyps werden dabei durch ein Identifizierungselement des parametrierbaren Modelltyps (P15) identifiziert; die besagten formatierten Informationen (P4) enthalten dabei darüber hinaus das besagte Identifizierungselement des parametrierbaren Modelltyps (P15);

sodass es möglich ist, zum Zeitpunkt der Herstellung der besagten formatierten Informationen (P4) den Typen des parametrierbaren Modells (P10) auszuwählen.

9. Verfahren nach irgendeinem der Ansprüche 3 bis 8; das besagte Verfahren ist dabei so beschaffen, dass es die Werte der besagten Parameter (P9) des besagten parametrierbaren Modells (P10) ermöglichen, eine mathematische Funktion (P16) der besagten Variablen (P6) zu bestimmen; die so bestimmte besagte mathematische Funktion (P16) ermöglicht es, die Qualität des besagten Bildes in Abhängigkeit von den bestimmten Werten der besagten Variablen (P6) zu verändern.

10. Verfahren nach Anspruch 8; zumindest einer der parametrierbaren Modelltypen, der nachfolgend allgemeines parametrierbares Modell (P17) genannt wird, ist dabei derart beschaffen, dass es die Parameterwerte des besagten allgemeinen parametrierbaren Modells (P17) ermöglichen, irgendeine mathematische Funktion der besagten Variablen (P6) zu bestimmen; die so bestimmte besagte mathematische Funktion (P16) ermöglicht es dabei, die Qualität des besagten Bildes in Abhängigkeit von den bestimmten Werten der besagten Variablen (P6) zu ändern.

11. Verfahren nach irgendeinem der Ansprüche 1 bis 10; die besagten formatierten Informationen (P4) enthalten dabei darüber hinaus Informatikprogramme (P18) und/ oder Links zu Informatikprogrammen (P19).

12. Verfahren nach irgendeinem der Ansprüche 1 bis 11; das besagte Verfahren ist dabei dazu bestimmt, die Aktualisierungshäufigkeit der Bildbearbeitungsmittel zu verringern, mit denen die Bildqualität in Bezug auf mehrere Fehler geändert werden kann; die besagten formatierten Informationen (P4) enthalten dabei darüber hinaus Daten in Bezug auf zumindest einen vorbestimmten Fehler (P24).

13. Verfahren nach Anspruch 12; die besagten Daten in Bezug auf den besagten vorbestimmten Fehler (P24) ermöglichen es darüber hinaus, den Bruchteil der besagten formatierten Informationen (P30) zu bestimmen, der angewandt werden kann, um die Qualität der Bilder in Bezug auf den besagten bestimmten Fehler zu ändern;

sodass die besagten Bildverarbeitungsvorrichtungen die Qualität der Bilder ändern können, indem sie formatierte Informationen in Bezug auf Fehler verwenden, von denen zumindest einer nach der Verbreitung der besagten Bildverarbeitungsvorrichtungen definiert wird.

14. System, das sich Bildverarbeitungsvorrichtungen (P1) und dabei vor allem einer Software und/ oder einer Komponente bedient; die besagten Bildverarbeitungsvorrichtungen (P1) ermöglichen es dabei, die Qualität von digitalen Bildern zu ändern, die von einer Gerätekette (P3) kommen oder für diese bestimmt sind; die besagte Gerätekette (P3) enthält dabei zumindest eine Bilderfassungseinrichtung und/ oder zumindest eine Bildwiedergabeeinrichtung; die besagten Bildverarbeitungsvorrichtungen (P1) setzen dabei formatierte Informationen (P4) im Zusammenhang mit Fehlern (P5) zumindest eines Gerätes (P25) der besagten Gerätekette (P3) um; ein Fehler bezieht sich dabei auf die Merkmale der Optik und/ oder des Sensors und/ oder der Elektronik und/ oder der integrierten Software eines Gerätes (P25); Beispiele für solche Fehler (P5) sind beispielsweise Verzerrung, Unschärfe, Vignettierung, Farbenabweichung, Farbwiedergabe, Gleichförmigkeit der Blitzausleuchtung, Sensorrauschen, Körnung, Astigmatismus, sphärische Aberration; die besagten formatierten Informationen (P4) hängen dabei zumindest von einer Variablen (P6) ab, die von einem messbaren Faktor gebildet wird, und die je nach den verschiedenen, vom selben Gerät (P25) erfassten, veränderten oder wiedergegebenen Bildern (P2) unterschiedlich ist, und die einen Einfluss auf den Fehler (P5) des vom Gerät (P25) erfassten, veränderten oder wiedergegebenen Bild ausübt; die besagten formatierten Informationen (P4) ermöglichen es, eine Übereinstimmung (P"7) zwischen einem Teil der besagten Variablen (P6) und den Merkmalen (P8) zu erstellen, wobei die Merkmale für jede Variable einen Quellentyp und ein Feldmerkmal in der Quelle enthält; die besagten Merkmale (P8) ermöglichen es den Bildverarbeitungsvorrichtungen, den Wert der besagten Variablen (P26) zu bestimmen, die dem besagten Merkmal (P8) entspricht, indem sie das identifizierte Feld aus der Quelle holen.

15. System nach Anspruch 14 mit zumindest einer Bilderfassungseinrichtung, das einen Sensor enthält, und das auch Mittel enthält, um im Variablenwert jede geometrische Umwandlung zu berücksichtigen, die zwischen dem Sensor und der Anwendung eines Korrekturalgorithmus auf das Bild angewandt wird.

16. System nach Anspruch 14 oder 15; die besagten formatierten Informationen (P4) enthalten dabei Parameter (P9) zumindest eines parametrierbaren Modells (P10), die von den besagten Variablen (P6) abhängen.

17. System nach irgendeinem der Ansprüche 14 bis 16; die besagte Übereinstimmung (P7) zwischen dem besagten Teil der besagten Variablen (P6) und den besagten Merkmalen (P8) wird dabei durch eine Übereinstimmungstabelle (P11) erstellt.

18. System nach irgendeinem der Ansprüche 16 oder 17; die besagten parametrierbaren Modelle (P10) variieren dabei je nach sukzessiver Aktualisierung der besagten Bildverarbeitungsvorrichtungen (P1); die besagten formatierten Informationen (P4) enthalten dabei darüber hinaus Identifizierungselemente (P12) der besagten parametrierbaren Modelle, die nach und nach angewandt werden (P29);

19. System nach irgendeinem der Ansprüche 14 bis 18; das besagte Merkmal (P8) bezeichnet dabei ein Feld (P13), dessen physische Bedeutung und Inhalt speziell in einem Format vom Typ Exif nach der Verbreitung der besagten Bildbearbeitungsmittel (P1) definiert wurden; die besagten Bildverarbeitungsvorrichtungen (P1) ermöglichen dabei den Erhalt des Feldwertes (P28), dessen physische Bedeutung und/ oder Wert nach der Verbreitung der besagten Bildverarbeitungsvorrichtungen (P1) definiert wurden;

20. System nach irgendeinem der Ansprüche 14 bis 19; die besagten Merkmale (P8), bezeichnen dabei Felder (P13), deren physische Bedeutung und Inhalt speziell in einem Format vom Typ Exif vor der Verbreitung der besagten Bildverarbeitungsvorrichtungen (P1) definiert wurden; die besagten Bilder weisen dabei eine Existenz vor der Verbreitung der besagten Bildverarbeitungsvorrichtungen (P1) auf; die besagten Bildverarbeitungsvorrichtungen (P1) ermöglichen es dabei, den Wert der besagten Felder (P13) zu erhalten, die von den besagten Merkmalen (P8) ausgehend von den Daten in Bezug auf das besagte Bild (P2) benannt werden.

21. System nach irgendeinem der Ansprüche 16 bis 20; die besagten formatierten Informationen (P4) können dabei Parameter verschiedener Arten von parametrierbaren Modellen (P10) enthalten; die Parameter eines parametrierbaren Modelltyps werden dabei durch ein Identifizierungselement des parametrierbaren Modelltyps (P15) identifiziert; die besagten formatierten Informationen (P4) enthalten dabei darüber hinaus das besagte Identifizierungselement des parametrierbaren Modelltyps (P15).

22. System nach irgendeinem der Ansprüche 16 bis 21; das besagte System ist dabei so beschaffen, dass es die Werte der besagten Parameter (P9) des besagten parametrierbaren Modells (P10) ermöglichen, eine mathematische Funktion (P16) der besagten Variablen (P6) zu bestimmen; die so bestimmte besagte mathematische Funktion (P16) ermöglicht es, die Qualität des besagten Bildes in Abhängigkeit von den bestimmten Werten der besagten Variablen (P6) zu verändern.

23. System nach Anspruch 22; zumindest einer der parametrierbaren Modelltypen, der nachfolgend allgemeines parametrierbares Modell (P17) genannt wird, ist dabei derart beschaffen, dass es die Parameterwerte des besagten allgemeinen parametrierbaren Modells (P17) ermöglichen, irgendeine mathematische Funktion der besagten Variablen (P6) zu bestimmen; die so bestimmte besagte mathematische Funktion (P16) ermöglicht es dabei, die Qualität des besagten Bildes in Abhängigkeit von den bestimmten Werten der besagten Variablen (P6) zu ändern.

24. System nach irgendeinem der Ansprüche 14 bis 23; die besagten formatierten Informationen (P4) enthalten dabei darüber hinaus Informatikprogramme (P18) und/ oder Links zu Informatikprogrammen (P19).

25. System nach irgendeinem der Ansprüche 14 bis 24; das besagte System ist dabei dazu bestimmt, die Aktualisierungshäufigkeit der Bildverarbeitungsvorrichtungen zu verringern, mit denen die Bildqualität in Bezug auf mehrere Fehler geändert werden kann; die besagten formatierten Informationen (P4) enthalten dabei darüber hinaus Daten in Bezug auf zumindest einen vorbestimmten Fehler (P24).

26. System nach Anspruch 24; die besagten Daten in Bezug auf den besagten vorbestimmten Fehler (P24) ermöglichen es darüber hinaus, den Bruchteil der besagten formatierten Informationen (P30) zu bestimmen, der angewandt werden kann, um die Qualität der Bilder in Bezug auf den besagten bestimmten Fehler zu ändern.

## FIG_1

## FIG_2

## FIG_3

INFORMATIONS FORMATEES

P4

PARAMETRES
P9

P12

MODELE PARAMETRABLE Ø

MODELE PARAMETRABLE

P10

Temps

P29

## FIG_4

Usine

P1

MOYEN DE TRAITEMENT D'IMAGE

VALEUR DE CHAMP

INFORMATIONS FORMATEES

P4

IDENTIFIANT

P8

P28

CHAMP Ø

CHAMP

P13

Temps

## FIG_5

Usine

P1

MOYEN DE TRAITEMENT D'IMAGE

INFORMATIONS FORMATEES

P4

IDENTIFIANT

P8

IMAGE

P2

P28

CHAMP

P13

Temps

P4

FIG_6

INFORMATIONS
FORMATEES

P15

P9

P18

P19

P10

P17

P16

$f_1(x,y)$

$f_2(x,y,\zeta)$

P20

P4

INFORMATIONS
FORMATEES

P21

P31

P23

FIG_7

P22

P4

INFORMATIONS
FORMATEES

P30

FIG_8

P24

DEFAUT

P5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- NISO draft standard. Data dictionary -Technical Metadata for Digital Still images- working draft, 1.0. 05 Juillet 2000